# EUROPÄISCHE PATENTANMELDUNG

(11) **EP 2 573 723 A2**
(43) Veröffentlichungstag der Anmeldung: **27.03.2013**
(21) Anmeldenummer: 12184164.7
(22) Anmeldetag: 13.09.2012
(51) Int. Cl.: G06Q 10/06

(54) **Verfahren zum Ausführen einer Ablaufsteuerung eines gemischten Prozesses**

(30) Priorität: 26.09.2011 DE 102011114416; 24.07.2012 DE 102012106688; 31.08.2012 DE 102012215538
(71) Anmelder: Trux, Walter, 81925 München (DE)
(72) Erfinder: Trux, Walter, 81925 München (DE)
(74) Vertreter: Kruspig, Volkmar

(57) **Zusammenfassung**

Die Erfindung betrifft ein Verfahren zum Ausführen einer logistischen Ablaufsteuerung eines gemischten, mit mindestens einem Nachbarprozess vernetzten und/oder mit mindestens einem Nachbarprozess zeitlich parallel laufenden Prozesses, wobei der Prozess und der mindestens eine Nachbarprozess aus jeweils mehreren deterministisch aufeinander folgenden Prozessschritten besteht, die stochastischen Störungen ausgesetzt sind. Hierbei ist eine datenverarbeitende Einrichtung mit einem auf der Einrichtung implementierten Datenbanksystem sowie ein oder mehrere Endgeräte an einzelnen räumlichen und/oder zeitlichen Prozessschritten und/oder Prozessstationen vorgesehen sind. Es werden folgende Schritte ausgeführt: Erzeugen je eines Standard-Ablaufplanes für den Prozess und/oder für den Nachbarprozess in Form einer auf dem Datenbanksystem gespeicherten Datensatzstruktur, Erfassen einer aktuell vorliegenden Belastungs- und Störungssituation durch die an den Prozessstationen angeordnete Endgeräte für eine vorab definierte Menge aus Prozessparametern, Übermitteln der Prozessparameter der Belastungs- und Störungssituation von den Endgeräten über ein Kommunikationsnetz an die Datenbank und Erzeugen eines Belastungs- und Störungsdatensatzes für den Prozess, jeden einzelnen Prozessschritt und/oder jede einzelne Prozessstation, Ausführen eines auf den jeweiligen Belastungs- und Störungsdatensatz abgestimmten Ausgleichsalgorithmus und Erzeugen eines Entlastungs- und Entstörungsdatensatzes aus Entlastungs- und Entstörungsanweisungen (16), Übermitteln der Entlastungs- und Entstörungsanweisungen als Informationen an die an den Prozessstationen angeordneten Endgeräte.

## Beschreibung

Die Erfindung betrifft ein Verfahren zum Ausführen einer Ablaufsteuerung eines gemischten Prozesses.

Der Effizienzsteigerung und der Organisation von Arbeits- und Veraltungsabläufen kommt eine immer größere Bedeutung zu. Bei der Fertigung komplexer Erzeugnisse mit vielen miteinander verzahnten und voneinander abhängenden Arbeitsschritten, bei der Behandlung großer Anzahlen von Patienten mit komplexen Krankheitsverläufen im Krankenhaus oder auch bei der organisatorischen Planung von Verwaltungsabläufen ist eine Steuerung derartiger Prozesse unverzichtbar. Derartige Prozesse sind in ihrer Komplexität für den Einzelnen schwer zu überblicken und auch für die Gesamtheit der damit befassten Personen auch nur schwer zu erfassen. Die Schwierigkeit der Prozesssteuerung wächst dabei mit jedem zusätzlichen Prozessschritt an und nimmt stark mit jedem Verzweigungspunkt zu, bei dem ein Prozess sich mit einem anderen Nachbarprozess oder Tochterprozess in Abhängigkeit befindet. Eine ad hoc Steuerung solcher Prozesse und eine Beseitigung von Störungen im komplizierten Prozessverlauf ist dabei nur in Einzelfällen möglich und erfordert eine sehr umfangreiche Kommunikation zwischen den einzelnen Prozessstationen, für die sehr oft die Zeit fehlt. Daher können solche Prozesse mit menschlichen Mitteln nur sehr begrenzt beeinflusst und optimal im Auge behalten werden.

Ein ubiquitärer Prozess, der sowohl bei betrieblichen Arbeitsabläufen, in der Wirtschaft und im Bereich der Verwaltung eine elementare Rolle spielt, ist der so genannte deterministische Prozess. Der deterministische Prozess ist ein Prozess, dessen Arbeitsweise vorab festgelegt wird. Die einzelnen Prozessschritte sind allesamt bekannt und folgen in einem bekannten Ablauf aufeinander. Das klassische Beispiel für einen deterministischen Prozess sind die Fahrpläne der Eisenbahnen. Dabei bildet zum einen jeder Zugdurchlauf an den einzelnen Stationen für sich einen deterministischen Teilprozess und diese Teilprozesse hängen zum anderen auch noch voneinander ab und sind miteinander verknüpft. Die Gesamtmenge aller Fahrpläne des Streckennetzes eines Eisenbahnunternehmens und die damit verknüpften Betriebsabläufe sind daher ein einziger großer und übergreifender deterministischer Prozess.

Eine zweite Gruppe stets auftretender Prozesse sind so genannte stochastische Prozesse. Stochastische Prozesse sind Prozesse, deren Ablauf im Wesentlichen durch sich stets ändernde und nicht genau vorher zu sehende Prozessschritte und Prozessverläufe bestimmt werden. Dies betrifft insbesondere das Wechselspiel zwischen einer spontanen Nachfrage von Kunden und/oder Benutzern und Anbietern, bei denen sich beide jeweils aufeinander einstellen müssen, ohne genau zu wissen, ob die Nachfrage oder das Angebot zueinander passen. Ein klassisches Beispiel hierfür ist das Taxigewerbe. An manchen Taxistandorten ist es nicht sicher, ob Kunden überhaupt vorhanden sind. Deswegen stehen dort häufig keine Fahrzeuge. Spontan kann aber die Nachfrage nach Taxis an diesem Taxistandort steigen, sodass plötzlich die Kapazität eines Fuhrparks umdisponiert werden muss, solange bis die Nachfrage wieder einbrechen kann.

Sehr häufig sind Prozesse, bei denen sowohl deterministische als auch stochastische Anteile vorhanden sind. Diese werden als gemischte Prozesse bezeichnet. In gemischten Prozessen vermengen sich die beiden Arten. Ein einschlägiges Beispiel für einen gemischten Prozess sind Abläufe in Krankenhäusern. Die medizinischen Prozesse, insbesondere die Behandlungen der Patienten und die Planung von Operationen lassen sich deterministisch festlegen, dagegen ist das Eintreffen von Patienten und deren Krankheitsverlauf nur sehr bedingt deterministisch erfassbar, sondern unterliegt stochastischen Schwankungen. Gemischte Prozesse stellen bei genauerer Betrachtung den eigentlichen Normalfall dar, der bei realen Prozessen vorliegt.

Derartige gemischte Prozesse lassen sich durch Menschen nur in einem begrenzten Maße steuern, so lange der Prozess nicht ein gewisses Maß an Komplexität überschreitet. Ist ein gemischter Prozess mit weiteren Teil- und Nebenprozessen verknüpft, die ebenfalls gemischte oder rein stochastische Prozesse sind, dann gelingt deren Steuerung nur durch intensive Kommunikation zwischen allen Prozessstationen. Der Kommunikationsbedarf wächst dabei umso mehr an, je komplizierter der Prozessablauf ist. Die Kommunikation gerät dabei sehr schnell an ihre Grenzen, sodass sie der Komplexität des Prozesses nicht mehr angemessen ist und nur noch verengt oder beschränkt erfolgt. Meist kommunizieren dann nur noch die unmittelbar benachbarten Prozessstationen wirklich miteinander, wobei die dabei erreichten Absprachen zusätzliche Probleme verursachen und nicht wirklich lösen. Derartige Prozesse sind mit menschlicher Verstandestätigkeit nicht mehr angemessen zu überschauen. Andererseits fehlen die technischen Mittel, um die Prozessabläufe erstens effizient zu erfassen, zweitens zu verarbeiten und drittens überhaupt einer menschlichen Beurteilung zugänglich zu machen. Es fehlt ein Kommunikations- und Steuerungssystem bzw. ein damit ausführbares Verfahren, das sekundierend an die Seite des Prozesses tritt und diesen regulierend beeinflusst.

Es besteht somit die Aufgabe, diesem genannten Problem abzuhelfen. Konkret geht es darum, Mittel zur Prozessteuerung anzugeben, mit denen eine Ablaufsteuerung eines gemischten, mit mindestens einem Nachbarprozess vernetzten und/oder mit mindestens einem Nachbarprozess zeitlich parallel laufenden Prozesses in einer möglichst optimierten Weise möglich ist, wobei die einzelnen, an dem Prozess teilnehmende Nutzer der logistischen Überwachungs- und Prozesssteuerarbeit enthoben werden. Deren Beurteilungsfähigkeit soll für andere zweckdienlichere Aufgaben freigemacht werden und nicht mehr an die Prozesssteuerung gebunden sein.

Die Aufgabe wird mit einem Verfahren zum Ausführen einer Ablaufsteuerung eines gemischten Prozesses mit den Merkmalen des Anspruchs 1 gelöst.

Das Verfahren umfasst Verfahrensschritte und Mittel für eine Ablaufsteuerung eines gemischten Prozesses. Dabei besteht der Prozess aus mehreren Prozessschritten und ist wiederholt auftretenden stochastischen Störungen ausgesetzt.

Als Mittel sind eine datenverarbeitende Einrichtung mit einem auf der Einrichtung implementierten Datenbanksystem sowie ein oder mehrere Endgeräte an einzelnen räumlichen und/oder zeitlichen Prozessstationen vorgesehen. Zwischen diesen Mitteln werden folgende Verfahrensschritte ausgeführt:
Als erstes erfolgt ein Erzeugen je eines Standard-Ablaufplanes für den Prozess und/oder für den Nachbarprozess in Form einer auf dem Datenbanksystem gespeicherten Datensatzstruktur.

In einem zweiten Schritt erfolgt ein Erfassen einer aktuell vorliegenden Belastungs- und Störungssituation durch die an den Prozessstationen angeordneten Endgeräte für eine vorab definierte Menge aus Prozessparametern.

In einem nächsten Schritt erfolgt ein Übermitteln der Prozessparameter der Belastungs- und Störungssituation an die Datenbank und es erfolgt ein Erzeugen eines Belastungs- und Störungsdatensatzes für den Prozess, jeden einzelnen Prozessschritt und/oder jede einzelne Prozessstation.

In einem darauf folgenden Schritt erfolgt ein Ausführen eines auf den jeweiligen Belastungs- und Störungsdatensatz abgestimmten Ausgleichsalgorithmus und es erfolgt ein Erzeugen eines Entlastungs- und Entstörungsdatensatzes aus Entlastungs- und Entstörungsanweisungen.

Anschließend erfolgt ein Übermitteln der Entlastungs- und Entstörungsanweisungen als Informationen an die an den Prozessstationen angeordneten Endgeräte.

Das Verfahren beruht somit im wesentlichen darauf, zum einen den gesamten Prozess an seinen einzelnen Prozessstationen und/oder Prozessschritten möglichst lückenlos zu erfassen und mit vorgegebenen Sollwerten und vorgegebenen Prozessabläufen fortlaufend zu vergleichen.

Der Prozessverlauf ist dabei in Form eines Standard-Ablaufplanes in einer Datenbank einer datenverarbeitenden Einrichtung vorab festgelegt. Der Standard-Ablaufplan stellt gewissermaßen einen Muster-Prozessablauf oder einen Soll-Prozess dar, der mit dem real vorliegenden und ablaufenden Prozess fortlaufend abgeglichen wird.

Zum Erfassen des real ablaufenden Prozesses dient eine entsprechende Menge aus Endgeräten, die an jedem Prozessschritt/jeder Prozessstation räumlich und/oder zeitlich lokalisiert sind. Über diese Endgeräte wird der momentane Zustand des Prozessverlaufs permanent an eine datenverarbeitende Einrichtung mit einem Datenbanksystem übertragen.

Auf der datenverarbeitenden Einrichtung erfolgt sodann der Abgleich zwischen den realen Prozessdaten, bzw. dem realen Prozessverlauf und dem vorab gespeicherten Muster-Prozessverlauf. Daraus resultiert ein Belastungs- und Störungsdatensatz, der für jeden einzelnen Prozessschritt angibt, in welchem Zustand sich der Prozess befindet. Resultierend daraus werden nun Algorithmen oder Datensätze erzeugt, mit denen die ermittelten Abweichungen auskorrigiert werden können. Die Algorithmen und Datensätze können vorab gespeichert und jeweils abgerufen werden. Diese Algorithmen und Datensätze erzeugen nun oder enthalten bereits konkrete Anweisungen, die an den Prozess, d.h. an die dort vorhandenen Endgeräte, zurückgegeben werden.

Das gesamte Verfahren erfolgt praktisch so, dass über den Gesamtprozess hinweg ein Mosaik aus vielen kleinen Einzelinformationen abgerufen wird, wobei die jeweiligen Nutzer den Gesamtprozess nicht im Auge haben müssen. Von der Seite des Nutzers aus betrachtet werden lediglich Daten erfasst und es werden lediglich Anweisungen empfangen ohne dass der jeweilige Benutzer über den Prozess im Bilde sein muss. Das Verfahren ermittelt somit selbsttätig einen optimierten Prozessverlauf.

Bei einer zweckmäßigen Ausgestaltung ist der der Standard-Auflaufplan in sich gegliedert, um verschiedene Aspekte des Prozessverlaufs zu ermitteln. In einer Ausführungsform enthält dieser mindestens einen kategorialen Unter-Ablaufplan, wobei als der mindestens eine Unter-Ablaufplan ein typbezogener, ein fallbezogener und/oder ein archivierter Unter-Ablaufplan vorgesehen ist. Ein typbezogener Unter-Ablaufplan betrifft dabei Prozessschritte, die auf das Ausführen von immer gleich ablaufenden Schritten ausgerichtet sind, beispielsweise das Fertigen von immer gleichen Einzelteilen. Der fallbezogene Unter-Ablaufplan betrifft Prozessschritte, bei denen jeweils einzelne fallbezogene Verzweigungen im Prozessablauf stattfinden müssen, wie beispielsweise vom Befund eines oder mehrerer Patienten abhängende Prozessschritte in einem Krankenhaus. Der archivierte Unter-Ablaufplan betrifft Prozessschritte, die momentan nicht ausgeführt werden, die aber bei Bedarf oder auf Anforderung reaktiviert werden können und für die momentan eine Prozesssteuerung notwendig wird. Dadurch können Prozessschritte komponentenweise an den Standard-Ablaufplan angefügt werden.

Bei einer zweckmäßigen Ausgestaltung kann der jeweilige Standard-Ablaufplan mit personen- und/oder dienststellenbezogenen Kategorien, insbesondere mitarbeiter- und/oder kundenspezifischen Kategorien, erzeugt werden. Möglich ist hier insbesondere ein Festlegen einer besonderen Wichtigkeit oder Vorrangigkeit einer Abteilung oder einer Dienststelle. Der Standard-Ablaufplan wird demnach in dieser Hinsicht "gewichtet".

Zweckmäßigerweise ist der Standard-Ablaufplan in Arbeits- und/oder Ausführungsschritte untergliedert. Jeder der Schritte weist einen Datensatz mit einem Anschluss-Datenfeld für Einlaufs- und Auslaufszeitpunkte, Ankunfts- und Abgabezeitpunkte und/oder Warteintervalle auf. Dadurch wird eine eindeutige Taktung und Zuordenbarkeit der hier gespeicherten Prozessschritte erreicht. Es werden Kriterien dafür vorgegeben, wann ein Prozessschritt eindeutig beginnt, welche Dauer für ihn vorgesehen ist und wann dieser Prozessschritt eindeutig endet. Damit können Fehlzuordnungen zwischen dem realen Prozess und dem Muster-Prozess im Standard-Ablaufplan vermieden werden.

Die Zuordenbarkeit und Taktung der den einzelnen Prozessschritten und/oder Prozessstationen zugeordneten Datensätze des Standard-Ablaufplans wird bei einer zweckmäßigen Fortbildung dadurch unterstützt und gesichert, indem diese ausschließlich an vorbestimmten Datenbankbereichen gespeichert werden. Diese vorbestimmten Datenbankbereiche entsprechen den einzelnen Prozessschritten und/oder Prozessstationen. Eine Übernahme der Datensätze bezüglich anderer Prozessschritte im Standard-Ablaufplan erfolgt über das Anschluss-Datenfeld. Die einzelnen im Standard-Ablaufplan gespeicherten Prozessschritte verfügen also über Datensätze mit genau bestimmten "Schnittstellen", dem oder den Anschluss-Datenfeldern. In diesen Feldern wird eindeutig verfolgbar, welche und wie viele Daten von dem einen Datenbankbereich in den anderen übertragen worden sind und wann das erfolgt ist. Darüber hinaus ist eindeutig definierbar, welche Daten überhaupt ausgetauscht werden können.

Die einzelnen Datensätze des Standard-Ablaufplanes können konkret folgende Struktur aufweisen: Sie enthalten erstens einen Plattform-Abschnitt. Dieser umfasst ein Identifizierungsfeld, ein Klassifizierungsfeld, ein Verwendungsfeld, ein Änderungs- und Verfolgungsfeld. Der Plattform-Abschnitt dient einer eindeutigen und einfachen Adressierung des einzelnen Datensatzes. Zweitens ist ein Prozess-Abschnitt vorgesehen. Dieser enthält die einzelnen, den jeweiligen Prozessschritten und/oder Prozessstationen zugeordnete Datensätze. Diese einzelnen Datensätze sind wie im vorhergehenden Absatz erwähnt ausgebildet.

Zur Erfassung der Belastungs- und Störungssituation wird zweckmäßigerweise so vorgegangen, dass diese an den einzelnen Prozessschritten und/oder Prozessstationen zeitlich skaliert erfasst und wiedergegeben wird. Dabei sind die zeitliche Skalierung und die zeitlichen Abschnitte frei wählbare Parameter. Die zeitliche Skalierung berücksichtigt, dass einerseits die einzelnen Prozessschritte jeweils eigene Prozessgeschwindigkeiten haben können und dass während ihres Ablaufs ein jeweils eigener zeitlicher Takt vorliegen kann. Einige Prozessschritte dauern vergleichsweise lang, während sie aber aus nur einem Vorgang bestehen, andere können dagegen innerhalb der gleichen Zeiteinheit mehrere Vorgänge enthalten. Unter diesen Bedingungen ist es zweckmäßig, den Zustand des zeitlich langen Prozessschrittes nur ein- oder zweimal innerhalb des zeitlichen Prozessintervalls zu erfassen, während bestimmte Prozessschritte, in denen viele Ereignisse auftreten können, sehr oft abgefragt werden müssen, um deren momentanen Zustand zu detektieren.

Bei einem Versagen des erwähnten Ausgleichsalgorithmus erfolgt bei einer zweckmäßigen Ausführungsform eine Ausgabe über dessen Versagen an ein Dispatcher-Endgerät. Dadurch wird ein menschliches Eingreifen jederzeit möglich, was aber nur palliative Lösungen bringt und daher nur als ein im Notfall auszuführender Verfahrensschritt vorgesehen ist.

Das Erfassen des aktuellen Prozessverlaufs bildet einen weiteren Kernpunkt der Erfindung. Bei einer zweckmäßigen Ausgestaltung erfolgt das Erfassen der aktuell vorliegenden Belastungs- und Störungssituation durch an einzelnen Prozessstationen und/oder Prozessschritte angeordnete Erfassungsmittel für vorab definierte Prozessparameter durch ein in Echtzeit ablaufendes Erfassungssystem (TRIM). Das Erfassungssystem führt dabei ein Erfassen dadurch aus, indem ein Verfolgen räumlicher und/oder zeitlicher Ortskoordinaten für steuerungsrelevante Daten, insbesondere Daten von Personen, Geräten und/oder Ressourcen, mit eingeschlossen ist.

Es wird somit nicht nur der Prozesszustand an einem räumlichen Ort des Prozessschrittes erfasst. Wenn der Prozessschritt ein Verschieben oder einen Transport eines Objektes umfasst, wird auch die aktuelle Position des Objektes vom Erfassungssystem umfasst, damit dadurch zumindest der Abschluss des Prozessschrittes sicher detektiert wird. Diese Art der Erfassung betrifft ebenso einen Ressourcendetektierung beispielsweise bei Lagerhäusern oder eine Überwachung von Inventarlisten, wie auch eines Personalbestandes.

Bei einer zweckmäßigen Ausführungsform erfolgt das Erfassen mittels drahtlos arbeitender und Personen oder räumlichen Abschnitten zugeordneten Ortungseinrichtungen. Dabei sind Aufenthaltsorte und/oder Standorte lokalisierbar und/oder es erfolgt eine Erfassung mittels an einzelnen Prozessstationen angeordneten Zähleinrichtungen, wobei durch die jeweilige Zählreinrichtung Durchsatzzahlen, Zulaufzahlen und/oder Ablaufzahlen lokal erfasst werden.

Die Zuordnung sichert, dass die ermittelten Zustandsdaten aus genau identifizierbaren Quellen stammen, wobei sichergestellt ist, dass der Ort, von dem aus die Zustandsdaten übermittelt werden, auch der Ort ist, an dem der gerade erfasste Prozessschritt abläuft.

Bei einer zweckmäßigen Ausführungsform werden die von dem Erfassungssystem erfassten Daten zusammen mit den Anweisungen des Ausgleichsalgorithmus an die einzelnen Prozessstationen und/oder an einen zentralen Steuerserver rückgemeldet. Dabei wird ein direkter in Echtzeit erfolgender Abgleich zwischen den Anweisungen und deren erzielter Wirkung erreicht.

Dem zentralen Steuerserver liegt somit in dieser Ausgestaltung sowohl der aktuell erfasste Prozesszustand vor, als auch die Daten und Anweisungen, die in dem Zeitintervall vorher an die betreffende Prozessstation ausgegeben worden sind. Dadurch wird ein direkter Abgleich über den Erfolg der Prozessteuerung möglich.

Das Erfassungssystem weist mobile Endgeräte als Erfassungsmittel in Verbindung mit einem auf das Erfassungssystem angepassten internen Kommunikationsnetzwerk auf. Dabei ist der Zugang zu den Erfassungsmitteln sicherheitswirksam geschützt und die Benutzung der Erfassungsmittel erfolgt personalisiert. Die Erfassungsmittel werden bei Nichtbenutzung neutralisiert.

Damit wird zum einen ein unbeabsichtigtes Lauschen Unbeteiligter oder ein Einspeisen falscher Daten vermieden. Zum anderen wird nachweisbar, von wem oder in welchem Auftrag, bzw. von welchem verifizierten Ort aus Prozessdaten gesendet werden. Zum anderen können wegen der Neutralisierung die Erfassungsmittel in einer begrenzten Anzahl bevorratet und von einer im Vergleich dazu größeren Personengruppe ausgeliehen und genutzt werden.

Bei einer weiteren Ausführungsform werden bei dem Ausführen des auf den jeweiligen Belastungs- und Störungsdatensatz abgestimmten Ausgleichsalgorithmus und bei dem Erzeugen eines Entlastungs- und Entstörungsdatensatzes Abweichungen zwischen einem Soll- und einem Ist-Wert von steuerungsrelevanten Prozessinformationen überwacht. Dabei werden diese Abweichungen auf Zufälligkeit und Signifikanz geprüft.

Das Verfahren weist somit eine gewisse Toleranz gegenüber nicht allzu großen Abweichungen im Prozessablauf auf. Hierzu dienen die Zufälligkeits- und Signifikantsprüfungen gegenüber den Abweichungen zwischen Soll- und Ist-Wert.

Bei einer zweckmäßigen Ausführungsform umfasst die Prüfung auf Zufälligkeit und Signifikanz der Abweichungen zwischen Soll- und Ist-Wert ein Setzen von Toleranzbereichen, wobei ein Überschreiten der Toleranzbereiche auf einem Kommunikationsgerät angezeigt wird, das der Prozessstation und/oder dem Prozessschritt zugeordnet ist.

In Verbindung damit ist mittels des Kommunikationsgerätes eine Rückmeldung über die Tolerierbarkeit der Überschreitungen der Toleranzbereiche ausführbar, wobei diese Rückmeldung mit einer eindeutig zuordenbaren Signatur verknüpft wird. Das Verfahren lässt somit jederzeit eine Beeinflussung und einen Eingriff durch den Nutzer zu. Die Signatur sichert, dass diese Beeinflussung nur durch entweder autorisierte und/oder eindeutig identifizierte Benutzer erfolgt und rückverfolgbar ist.

Zweckmäßigerweise werden die als signifikant detektierten Abweichungen einer sich wiederholenden stufenförmigen Auswertung unterzogen. Bei dieser stufenförmigen Auswertung wird fortlaufend ein Grad eines Korrekturbedarfs der jeweiligen signifikanten Abweichung ermittelt. Dabei werden die jeweiligen signifikanten Abweichungen aus einem Speicher geladen. Im Anschluss daran wird für jede signifikante Abweichung ein Kerninhalt ermittelt. In Verbindung damit erfolgt eine statistische Ermittlung eines Themenclusters. Ein Grad für einen Handlungsbedarf wird dann auf der Grundlage des Kerninhaltes und des Themenclusters ermittelt.

Ein derartiger Verfahrensablauf berücksichtigt, dass bei der als signifikant beurteilten Abweichung nicht allein das Überschreiten eines gewissen Parameterbereiches ausschlaggebend ist, sondern dass die Abweichung im Rahmen eines Kontextes detektiert werden muss. Dies betrifft insbesondere Angaben über den Grund und die Ursachen der Abweichung und deren Relevanz in Bezug auf andere Themengebiete. Dazu dient die Ermittlung eines Themenclusters und des Kerninhaltes. Der Themencluster gibt die Verbindung mit anderen und benachbarten Prozessabläufen an. Der Kerninhalt beinhaltet Aussagen über die Ursachen der Abweichung. Der Handlungsbedarf wird nun beispielsweise so ermittelt, dass relativ isolierte Abweichungen mit einem kleinen Themencluster einem niedrigeren Handlungsbedarf zugeordnet werden.

Zweckmäßigerweise wird an den bei dem Verfahren verknüpften Endgeräten eine zeitweilige Personalisierung ausgeführt. Sämtliche Endgeräte bilden also im nicht benutzten Zustand grundsätzlich eine neutrale, nicht personalisierte Endgerätemenge. Jedes einzelne Endgerät wird vor einer erstmaligen Verwendung personalisiert. Die Personalisierung wird nach Ende der Verwendung gelöscht und das jeweilige Endgerät wird in den neutralen nicht personalisierten Zustand zurückgesetzt. Die Endgeräte werden somit aus einem allgemeinen Endgerätepool entnommen, zeitweise in dem Verfahren personalisiert verwendet und anschließend wieder in den Pool zurück gegeben.

Bei einer weiteren Ausgestaltung werden die bei dem Verfahren beteiligten Endgeräte in einen nicht benutzbaren Betriebszustand versetzt, sofern eine Datenverbindung zwischen einem an einem Benutzer befestigten Transponder und dem jeweiligen personalisierten Endgerät über eine vorbestimmte Zeit hinaus unterbrochen und/oder inaktiv ist.

Durch diese Ausgestaltung wird gesichert, dass von dem betreffenden Endgerät aus keine Daten mehr übermittelt werden können, sobald das Endgerät von der Person nicht mehr "am Mann" getragen wird, auf die das Endgerät personalisiert ist. Die Person trägt dabei einen Transponder und das Endgerät überprüft in vorgegebenen Intervallen die Präsenz des Transponders und schaltet sich gegebenenfalls selbst ab. Damit wird verhindert, dass ein liegengelassenes oder unberechtigt von einem Dritten an sich genommenes Endgerät von einer unbefugten Person genutzt wird.

In Verbindung damit können die bei der Neutralisierung der Endgeräte und/oder die bei dem Zurücksetzen der Endgeräte in den unbenutzbaren Zustand zu löschenden Daten in einen Auslagerungsserver übertragen und anschließend auf dem Endgerät gelöscht werden. Dadurch wird in jedem Fall ein Datenbackup angelegt und es werden die gespeicherten Daten für einen späteren Zugriff bereit gehalten.

Bei einer zweckmäßigen Ausgestaltung sind die Endgeräte für eine Sprachaufzeichnung und/oder eine Spracherkennung eingerichtet. Dabei werden die Sprachaufzeichnung und das Resultat der Spracherkennung in einem Server gespeichert. Hierdurch kann der Nutzer umstandslos Prozesszustände melden, die mittels Spracherkennung in Prozessdaten übersetzt und entsprechend verarbeitet werden. Die Speicherung dient vorrangig einer Protokollierung der Spracheingabe.

Zusätzlich kann die gesprochene Eingabe mit einem den Sprecher identifizierenden Signalcode verknüpft sein. Außerdem kann bei einem über die Endgeräte erfolgenden Dialog ein Umschalten auf den identifizierenden Signalcode ausführbar sein, wobei ein direktes Ansprechen der Gesprächsteilnehmer ausführbar ist.

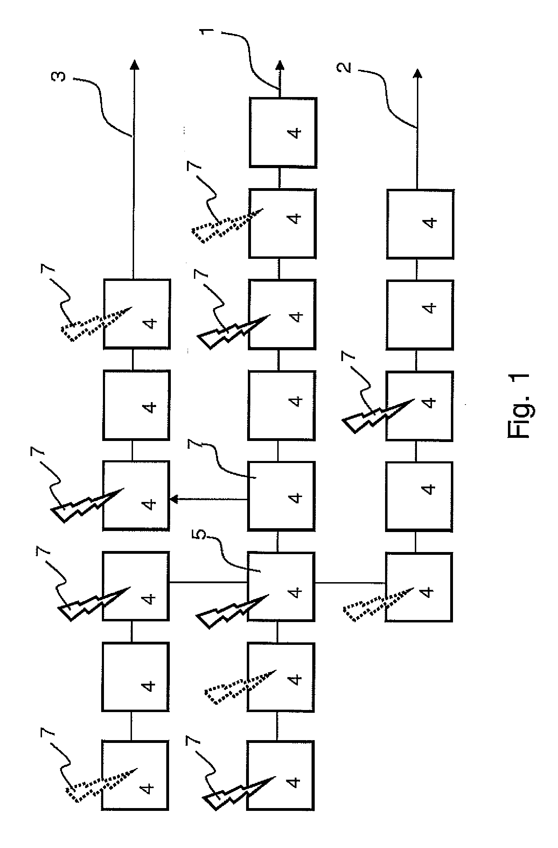

Das erfindungsgemäße Verfahren soll nachfolgend anhand beispielhafter Ausführungsformen und Verfahrensabläufe näher erläutert werden. Zur Verdeutlichung dienen die Figuren 1 bis 28. Es werden für gleiche und/oder gleichwirkende Teile und Verfahrenabschnitte dieselben Bezugszeichen verwendet.

Es zeigt:
- Fig. 1: eine beispielhafte schematische Darstellung mehrerer miteinander verknüpfter gemischter Prozessverläufe,
- Fig. 2: eine beispielhafte Darstellung einer Verbindung der gemischten Prozessverläufe und der erfindungsgemäßen logistischen Ablaufsteuerung,
- Fig. 3: eine beispielhafte Darstellung eines Servers mit einem Standard-Ablaufplan und weiteren Komponenten,
- Fig. 4: einen beispielhaften Aufbau eines Standard-Ablaufplans,
- Fig. 5: eine beispielhafte Struktur eines Datensatzes des Standard-Ablaufplans,
- Fig. 6: eine beispielhafte Erfassung einer Belastungs- und Störungssituation anhand eines Überganges zwischen zwei Fließbändern,
- Fig. 7: eine beispielhafte Ausgabe eines Entlastungs- und Entstörungsdatensatzes für die in Fig. 6 gezeigte Belastungs- und Störungssituation,
- Fig. 8: eine beispielhafte Darstellung eines mehrstufigen Prozesses aus mehreren Stationen über der Durchlaufzeit,
- Fig. 9: ein beispielhaftes Diagramm über die Auswirkungen stochastischer Einflüsse auf Ankunfts- und Bearbeitungszeiten in Abhängigkeit von Zeit oder Fall,
- Fig. 10: eine Darstellung eines Zusammenwirkens aus Fallsteuerung und Betriebssteuerung im Rahmen einer integrierten Systemsteuerung,
- Fig. 11: eine Übersichtsdarstellung über wichtige Basiskomponenten des erfindungsgemäßen Verfahrens,
- Fig. 12: eine Beispieldarstellung einer Struktur von Fall-Datenbanken,
- Fig. 13: eine Beispieldarstellung einer Satz-Struktur von Falldaten,
- Fig. 14: eine Darstellung eines Prozessschrittes als Netzknoten,
- Fig. 15: eine Darstellung eines beispielhaften Belastungsplans,
- Fig. 16: eine Darstellung einer beispielhaften Engpassanalyse,
- Fig. 17: eine beispielhafte Konfiguration einer Endgerätemenge,
- Fig. 18: ein beispielhaftes Diagramm zur Illustration signifikanter Abweichungen,
- Fig. 19: beispielhafte TRIM-Endgeräte,
- Fig. 20: eine beispielhafte sicherheitswirksam geschützte Konfiguration von Systemspeicher und Steuerung am Beispiel eines Patientenfalls,
- Fig. 21: eine Beispieldarstellung zur Ermittlung eines Handlungsbedarfs,
- Fig. 22: ein beispielhafter Ablaufplan zur Ermittlung des Grades des Handlungsbedarfs,
- Fig. 23: ein Beispiel für eine Systemarchitektur für eine Betriebssteuerung in einem Krankenhaus,
- Fig. 24: eine beispielhafte Konfiguration der Ablaufsteuerung am Beispiel eines Patienten-check-ins in einem Krankenhaus,
- Fig. 25: eine beispielhafte Konfiguration der Ablaufsteuerung am Beispiel einer Aufnahme und Anamnesestellung in einer Ambulanz,
- Fig. 26: eine beispielhafte Ausführungsform einer Schnittstellensicherung und eines Zeitmessers in einer medizinischen Station,

- Fig. 27: eine beispielhafte Ausführungsform einer Betriebssteuerung im Bereich eines ärztlichen Dienstes,
- Fig. 28: eine beispielhafte Ausführungsform einer Betriebssteuerung im Bereich einer Patientenversorgung.

Die nachfolgend gezeigten Ausführungsformen betreffen zunächst allgemein anwendbare Grundzüge und Grundkomponenten des Verfahrens. Im Anschluss daran werden Verfahrensaspekte anhand einer Ablaufsteuerung für Prozessverläufe in medizinischen Einrichtungen beschrieben.

Fig. 1 zeigt eine beispielhafte schematische Darstellung mehrerer miteinander verknüpfter gemischter Prozessverläufe, die Gegenstand der erfindungsgemäßen Ablaufsteuerung sind.

In dem hier gezeigten Beispiel ist eine Menge aus einem Prozess 1 mit zwei Nachbarprozessen 2 und 3 dargestellt, die jeweils mit dem Prozess 1 verknüpft sind. Sowohl der Prozess als auch dessen Nachbarprozesse bestehen aus im Rahmen des jeweiligen Prozessverlaufs zeitlich aufeinander folgenden Prozessschritten 4.

Die Nachbarprozesse 2 und 3 sind mit dem Prozess 1 auf zwei unterschiedliche Arten verknüpft. Der Nachbarprozess 2 schneidet den Prozess 1 an einem Knotenpunkt 5. Der Knotenpunkt 5 ist ein Prozessschritt, den sowohl der Prozess 1 als auch der Prozess 2 miteinander gemeinsam haben. Der Prozess 1 und der Prozess 2 laufen ansonsten zeitlich parallel zueinander ab.

Der Nachbarprozess 3 ist als ein Tochterprozess des Prozesses 1 ausgebildet. Dieser beginnt an einem Verzweigungspunkt 6 des Prozesses 1 und läuft danach zeitlich parallel zum Prozess 1 weiter. Alle drei Prozesse sind demnach miteinander vernetzt und können auf unterschiedliche Weise voneinander abhängig sein. So kann beispielsweise der Nachbarprozess 2 ein Prozess sein, bei dem an dem Knotenpunkt 5 ein Prozessoutput an den Prozess 1 übergeben und dafür von dem Prozess 1 ein Output dieses Prozesses übernommen wird. Beide Prozesse sind in einem solchen Fall voneinander abhängig. Möglich ist aber auch eine nur einseitige Abhängigkeit beider Prozesse. Dies ist zum Beispiel dann der Fall, wenn der Prozess 2 am Knotenpunkt 5 vom Prozessoutput des Prozesses 1 gespeist wird, ohne aber etwas an den Prozess 1 zu übergeben.

Der Nachbarprozess 3 hängt jedoch vollständig vom Prozess 1 ab und ist ein echter Tochterprozess. Er startet am Verzweigungspunkt 6 und kommt dann zum Erliegen, wenn auch der Prozess 1 vor dem Verzweigungspunkt 6 zum Erliegen kommt und abgebrochen wird.

Sämtliche Prozesse 1, 2 und 3 sind hier deterministisch angelegt. Die einzelnen Prozessschritte folgen in einer eindeutigen und festgelegten Folge aufeinander. Sie sind jedoch stochastischen Störungen 7 unterworfen, die praktisch jeden Prozessschritt 4 in einer unvorhergesehenen Weise und zu einem beliebigen Zeitpunkt beeinflussen können. Damit sind diese Prozesse allesamt gemischte Prozesse. Dabei ist einsichtig, dass diese stochastischen Störungen besonders dann einen starken Einfluss auf den Prozessablauf der einzelnen Prozesse haben, wenn diese am Knotenpunkt 5 oder am Verzweigungspunkt 6 bzw. in deren Umgebung auftreten. Stochastische Störungen am Endpunkt jedes einzelnen Prozesses sind dabei weniger bedeutsam als jene, die am Anfang oder mitten im Prozessverlauf eintreten. Es gilt somit erstens die statistischen Störungen zu ermitteln, zweitens deren Relevanz festzustellen und drittens geeignete Anweisungen zu generieren, um diese Störungen zu beseitigen oder auszugleichen.

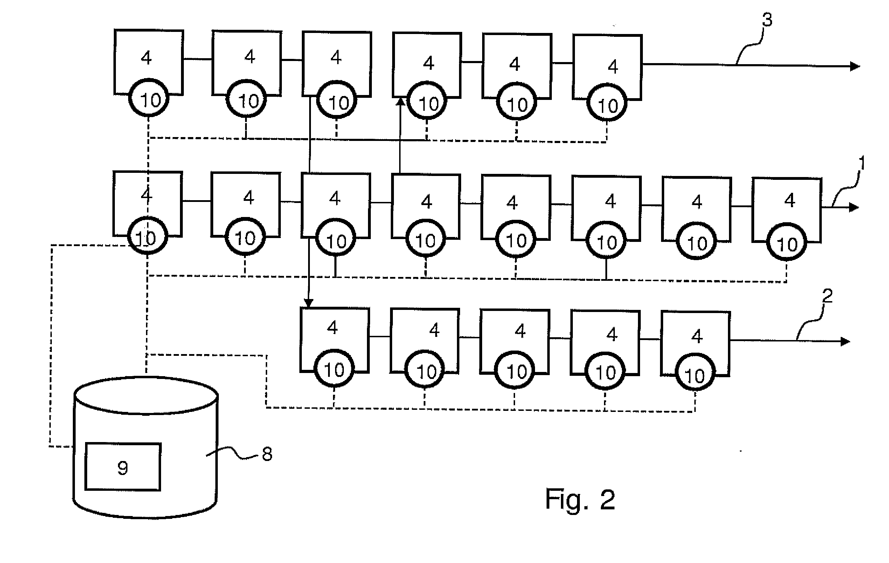

Fig. 2 zeigt hierzu eine beispielhafte Darstellung einer Verbindung der gemischten Prozessverläufe 1, 2 und 3 und einer Ausführungsform der erfindungsgemäßen logistischen Ablaufsteuerung. Die logistische Ablaufsteuerung besteht zum einen aus einer datenverarbeitenden Einrichtung 8, beispielsweise einem Serversystem, auf dem ein Datenbanksystem 9 implementiert ist. Jedem der Prozessschritte 4 der einzelnen Prozesse 1, 2 und 3 ist ein Endgerät 10 zugeordnet. Die Zuordnung kann sowohl eine permanente feste räumliche Zuordnung sein, beispielsweise kann das Endgerät am Ort des einzelnen Prozessschrittes fest installiert sein. Die Zuordnung kann aber auch zeitlich variabel vorgesehen sein, beispielsweise dann, wenn der Prozessschritt nicht an einem festen Ort erfolgt, sondern nur als Teil einer zeitlicher Abfolge auftaucht. Ein räumlich fest installiertes Endgerät ist beispielsweise eine Zähleinrichtung. Ein zeitlich variabel zugeordnetes Endgerät ist beispielsweise eine Registrierungseinheit für bestimmte Diagnosen in einem Krankenhaus, die an verschiedenen Orten oder Stationen auftreten können oder für Personalressourcen.

Sämtliche Endgeräte registrieren fortlaufend den Prozesszustand an jedem der Prozessschritte 4 und/oder den dafür vorgesehenen Prozessstationen. Die Zustandsdaten werden sodann an die datenverarbeitende Einrichtung übertragen. An der datenverarbeitenden Einrichtung liegt dann im Ergebnis eine Übersicht über den Gesamtzustand jedes einzelnen Prozesses 1, 2 oder 3 oder auch eine Gesamtübersicht über alle drei vernetzten Prozesse vor. Die datenverarbeitende Einrichtung analysiert aus der Gesamtheit der vorliegenden Daten aus jedem einzelnen Endgerät den Zustand des gesamten Prozesses 1, 2 und/oder 3 sowie des gesamten Prozesszusammenhangs aus allen drei Prozessen.

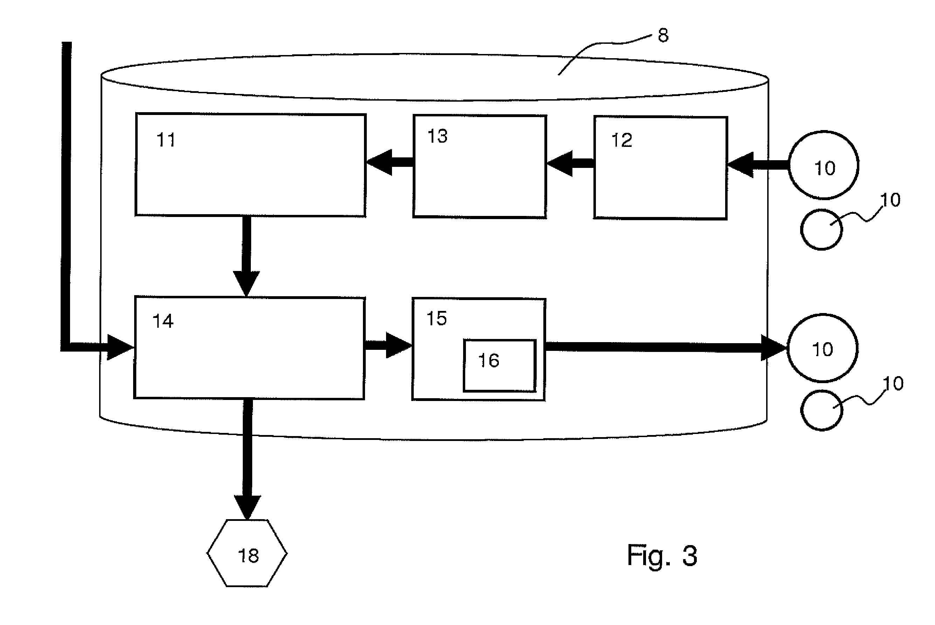

Fig. 3 zeigt eine beispielhafte Darstellung eines Servers 8 zum Ausführen der logistischen Ablaufsteuerung. Die in dem Server gespeicherten Daten liegen in Form einer Datenbankstruktur vor. Die Datenbankstruktur wiederum unterteilt sich in eine Struktur aus Datensätzen. Einer dieser Datensätze ist ein Standard-Ablaufplan 11 für den jeweils zu steuernden Prozess, beispielsweise den Prozess 1, den Prozess 2, den Prozess 3 oder den übergreifenden Prozess aus den genannten drei Prozessen. Der Standard-Ablaufplan stellt ein innerhalb des Servers 8 gespeichertes Bild eines idealisierten Musterprozesses dar, mit dem die von außen eingehenden Prozessparameter abgeglichen werden können.

Innerhalb des Servers 8 wird das Verfahren zur logistischen Ablaufsteuerung wie folgt ausgeführt:
Die Menge der Endgeräte 10 liefert eine Menge von Prozessdaten 12. Die Prozessdaten sind entsprechend der Lokalisierung der Endgeräte an den einzelnen Prozessschritten bereits vorstrukturiert und bilden ein mosaikartiges Zustandsbild des momentanen Prozesszustandes. Innerhalb der Datenbankstruktur des Servers 8 werden diese Prozessparameter zu einem Belastungs- und Störungsdatensatz 13 verdichtet. Das heißt insbesondere, dass die Prozessparameter so strukturiert werden, dass diese auf die Datenstruktur des Standard-Ablaufplans abgebildet werden können. Der Standard-Ablaufplan stellt grundsätzlich eine Datenstruktur des zu steuernden Prozesses dar, die aus lauter Soll-Größen besteht. Der Belastungs- und Störungsdatensatz 13 bildet dagegen ein Abbild des aktuellen realen Prozesses und enthält die Prozessparameter 12 als eine Menge von Ist-Größen. Beide Datenstrukturen, die des Standard-Ablaufplans 11 und die des Belastungs- und Störungsdatensatzes 13, werden in einem nächsten Schritt aufeinander abgebildet und abgeglichen. Dabei zeigen sich in der Regel Abweichungen zwischen den Soll-Daten des Standard-Ablaufplanes 11 und den Ist-Daten des Belastungs- und Störungsdatensatzes 13. Diese Abweichungen werden in einem nächsten und weiter unten eingehender behandelten Verfahrensschritt auf ihre Signifikanz und Relevanz geprüft.

Als nächster Schritt erfolgt ein Aktivieren eines Ausgleichsalgorithmus 14. Der Ausgleichsalgorithmus kann von einer hier nicht gezeigten Datenbank, der so genannten Ausgleichdatenbank, hinzu geladen werden. Die Ausgleichsdatenbank enthält eine Bibliothek aus Ausgleichsalgorithmen, die auf eine bestimmte, immer wieder auftretende Art von Prozessstörungen angepasst sind. In einem solchen Fall wirkt der Server hinsichtlich seiner Funktion als eine automatisierte Steuerungsinstanz für den überwachten Prozess, der eine direkte Kommunikation aller Nutzer auf der Ebene der Prozessstationen überflüssig macht und an deren Stelle ein automatisches Erfassen von Prozessdaten und eine übergeordnete automatisch erstellte Reaktion darauf generiert. Letztlich müssen die Nutzer an den Prozessstationen nicht mehr im Einzelnen wissen, wie der Gesamtprozess aussieht. Das Erfassen und Reagieren wird ihnen durch den Server und den Ausgleichsalgorithmus abgenommen. Eine derartige Vorgehensweise ist dann zweckmäßig, wenn die Prozessstörungen an sich bekannter Natur sind, immer wieder auftreten und mit bekannten Steuerparametern korrigiert werden können.

Möglich ist aber auch ein direktes Erzeugen des Ausgleichsalgorithmus in Echtzeit. Dabei werden verschiedene Algorithmenelemente miteinander kombiniert und es wird in einer internen Simulation ermittelt, welche Kombination aus den algorithmischen Elementen einen optimalen Einfluss auf den Prozessverlauf hat. Eine derartige Simulation läuft im Wesentlichen iterativ ab. Das Ergebnis der Simulation wird als Eingangsdatum an den Beginn der Simulation eingegeben und es wird ein optimales Prozessergebnis ermittelt.

Der Ausgleichsalgorithmus besteht im wesentlichen aus Anweisungen, die an den einzelnen Prozessstationen bzw. innerhalb der einzelnen Prozessschritte auszuführen sind, um den Prozessverlauf wieder zu korrigieren und die Prozessstörung aufzuheben. Er stellt gewissermaßen das Bild eines Gegenprozesses dar, der dem realen Prozess aufgeprägt werden muss.

Der Ausgleichsalgorithmus kann verschiedene algorithmische Prozeduren zur Anwendung bringen. Dies betrifft insbesondere Verfahren zur linearen und nicht linearen Optimierung und auch eine Optimierung von Fall- oder Prozessrouten nach dem Problem des travelling salesman, des Handlungsreisenden.

Das Aktivieren und Aufprägen des Gegenprozesses erfolgt durch Entlastungs- und Entstörungsdatensätze 15. Diese enthalten Entlastungs- und Entstörungsanweisungen 16. Im Wesentlichen handelt es sich dabei um die Anweisungen aus dem Ausgleichsalgorithmus. Diese sind aber in den Entlastungs- und Störungsdatensätzen auf die einzelnen Prozessschritte und Prozessstationen aufgeschlüsselt. Der Ausgleichsalgorithmus wird also in den realen Prozessablauf übersetzt. Die Entlastungs- und Entstörungsanweisungen enthalten somit detaillierte Anweisungen an die einzelnen Prozessstationen und Prozessschritte um den aktuellen Störzustand zu beheben. Es ist einsichtig, dass dabei an jedem Prozessschritt und an jeder Prozessstation andere Anweisungen ausgegeben werden, die darüber hinaus zeitversetzt angelegt sind. Näheres hierzu wird in der späteren Beschreibung erläutert.

Die Entlastungs- und Entstörungsanweisungen werden an die entsprechenden Endgeräte 10 an den jeweiligen Prozessstationen und Prozessschritten ausgegeben.

Bei einem Scheitern eines Generierens des Ausgleichsalgorithmus oder für den Fall, dass ein Ausgleichsalgorithmus nicht verfügbar ist, erfolgt eine Ausgabe an ein Dispatcher-Endgerät 18. Dadurch wird eine Information ausgegeben, dass das Verfahren zur logistischen Ablaufsteuerung scheitert und somit manuell eingegriffen werden muss.

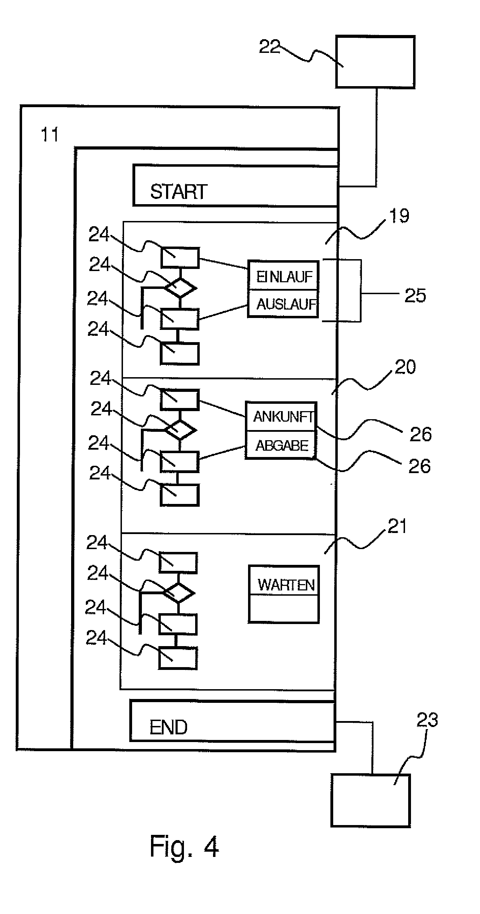

Fig. 4 zeigt in einer schematischen Darstellung einen beispielhaften Aufbau eines Standard-Ablaufplans. Der Standard-Ablaufplan ist in mehrere Komponenten unterteilt, die als jeweils einzelne Datensätze ausgebildet sind. Der Standard-Ablaufplan ist somit als ein hierarchischer Datensatz ausgebildet. Die einzelnen Datensätze enthalten so genannte Unterablaufpläne, die den zu steuernden Prozess in mehreren Aspekten abbilden. Es sind dies im hier vorliegenden Fall ein typbezogener Unterablaufplan 19, ein fallbezogener Unterablaufplan 20 und ein archivierter Unterablaufplan 21. Der typbezogene Unterablaufplan betrifft die auszuführenden Prozessschritte, die notwendig sind, um eine Menge gleichartig ausgebildeter Prozessergebnisse zu erzeugen. Dies sind beispielsweise die typischen Arbeitsschritte bei einer Massenfertigung. Der typbezogene Unterablaufplan legt somit sein Schwergewicht auf Prozessschritte, die von den einzelnen Prozessstationen an den einzelnen zu bearbeitenden Objekten ausgeführt werden müssen, ohne individuelle Einzelheiten der Objekte zu berücksichtigen.

Der fallbezogene Unterablaufplan stellt dagegen den auszuführenden Prozess aus der Perspektive des individuell in dem Prozess bearbeiteten Objektes dar. Ein typischer fallbezogener Unterablaufplan ist beispielsweise die Folge der Behandlungsschritte an einem bestimmten Patienten mit einer ganz konkreten Krankheit, während der typbezogene Unterablaufplan die generelle Vorgehensweise in einem Krankenhaus betrifft. Der archivierte Unterablaufplan enthält aktuell nicht aktive Prozessverläufe, die aber bei Bedarf zuschaltbar sind. Kategorial kann der archivierte Unterablaufplan natürlich auch fall- oder typbezogen sein, sodass es hier gewisse Überschneidungen in den Einteilungen gibt.

Der Standard-Ablaufplan kann mit weiteren Standard-Ablaufplänen kombiniert werden. Insofern stellt er einen eigenständigen modular verwendbaren Datensatz dar. Zum Verknüpfen mit anderen Standard-Ablaufplänen ist ein so genanntes Input-Feld 22 und ein Output-Feld 23 vorgesehen. Diese Felder sind so ausgebildet, dass diese mit anderen Input- bzw. Output-Feldern anderer Standard-Ablaufpläne zusammenpassen müssen. Dadurch sind nicht beliebige Standard-Ablaufpläne miteinander kombinierbar, sondern nur solche, deren Zusammenspiel vorab abgeprüft und dafür ausgelegt worden ist.

Innerhalb der Unterablaufpläne sind die einzelnen Prozessschritte durch Arbeits- und Ausführungsschritte 24 abgebildet. Jeder einzelne dieser Arbeits- und Ausführungsschritte ist wiederum in Form eines eigenen Datensatzes 25 ausgebildet. Dieser Datensatz beschreibt detailliert, welche Prozessgrößen an dem einzelnen Arbeits- und Ausführungsschritt vorliegen müssen, welche Toleranzbereiche hierzu zugeordnet sind und wie der Übergang zum nächsten Prozessschritt erfolgen muss. Dieser Übergang von dem einen Arbeits- und Ausführungsschritt 24 wird in dem Datensatz 25 jeweils durch ein Anschluss-Datenfeld 26 erfasst. Das Anschluss-Datenfeld beinhaltet insbesondere einen Einlaufszeitpunkt und einen Auslaufszeitpunkt des Arbeits- und Ausführungsschrittes. Es gibt beispielsweise an, dass ein Werkstück nach einer gewissen Zeit T gemessen von einem gegebenen Startzeitpunkt an, an dem entsprechenden Arbeits- und Ausführungsschritt angelangt sein muss. Der Auslaufszeitpunkt gibt dann an, dass das Werkstück nach Bearbeitung an einer entsprechenden Prozessstation zu einem Zeitpunkt T + t an den nächsten Arbeits- und Ausführungsschritt übergeben worden sein muss. Das Anschluss-Datenfeld des Datensatzes dieses nächsten Arbeits- und Ausführungsschrittes enthält dann einen Einlaufszeitpunkt T' = T + t, sodass diese beiden Datensätze lückenlos miteinander verklammert sind. Die Zeiten T und T' gelten dann global und sind bis auf Toleranzangaben starr als Sollwerte vorgegeben.

Die Datensätze von Arbeits- und Ausführungsschritten bei fallbezogenen Unterablaufplänen enthalten stattdessen Anschluss-Datenfelder mit individuellen Ankunfts- und Abgabezeiten. Sie betreffen beispielsweise einen Zeitpunkt D einer Ankunft eines Patienten auf einer Station, der praktisch immer individuell ist und der zweckmäßigerweise in Form einer Datumsangabe angegeben wird, und sie betreffen weiter einen Abgabezeitpunkt D' = D + A, wobei A beispielsweise eine individuelle Aufenthaltsdauer des Patienten ist.

Möglich ist aber auch, sowohl bei den typ-, als auch bei den fallbezogenen Unterablaufplänen ein Anschluss-Datenfeld mit unbestimmten Zeitangaben oder WARTE-Anweisungen. Dies betrifft insbesondere Verknüpfungen mit Angaben über Bedingungen in Form von Wenn/Dann-Entscheidungen, bei denen nicht feste Zeitpunkte, sondern höchstens Zeitintervalle angegeben werden können.

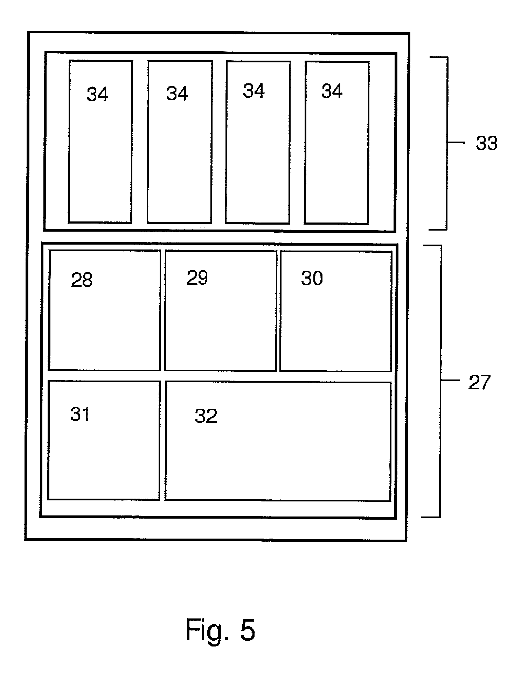

Fig. 5 zeigt eine beispielhafte Struktur eines Datensatzes des Standard-Ablaufplans. Der Datensatz weist einen Plattform-Abschnitt 27 auf. Dieser enthält ein Identifizierungsfeld 28, ein Klassifizierungsfeld 29, ein Verwendungsfeld 30 und ein Änderungs- und Verfolgungsfeld 31. Der Plattform-Abschnitt stellt eine Kennung bzw. einen Kopf des Datensatzes dar. Er erlaubt einen einfachen Überblick darüber, in welchem Zusammenhang der Standard-Ablaufplan angewendet werden soll und dient darüber hinaus zu dessen Adressierung innerhalb der Datenbank.

Das Identifizierungsfeld stellt die Adressierbarkeit sicher. Dieses Feld enthält beispielsweise eine Kennung des Standard-Ablaufplans, die eindeutig einem bestimmten Prozess in einer bestimmten Abteilung, eines Unternehmensbereiches, eines Krankenhauses und dergleichen Einrichtungen zugeordnet ist. Das Klassifizierungsfeld enthält beispielsweise einen Code, der auf die Bedeutsamkeit oder den Rang des Standard-Ablaufplans Bezug nimmt oder auf Vertraulichkeitseinstufungen abstellt. Das Verwendungsfeld enthält im einfachsten Fall einen Kommentartext, der den Standard-Ablaufplan darstellt und erläutert und Hinweise auf dessen Verwendung gibt. Das Änderungs- und Verfolgungsfeld protokolliert Änderungen am Standard-Ablaufplan nach Zeit und der geänderten Stelle in Verbindung mit einer Signatur der Person, die diese Änderungen ausgeführt hat. Es erlaubt, aus den im Standard-Ablaufplan enthaltenen Änderungen eine History zusammen zu stellen, bei der frühere Versionen des Standard-Ablaufplans wieder hergestellt werden können.

Zusätzlich ist ein Personalfeld 32 vorgesehen, dass auf eine Person verweist, die für den Standard-Ablaufplan organisatorisch im Allgemeinen bzw. im konkreten Einzellfall zuständig ist. Dies kann insbesondere der oben genannte Inhaber des oben genannten Dispatcher-Endgerätes sein, auf dem die Meldungen über einen nicht erfolgreichen Ausgleichsalgorithmus ausgegeben werden und der nun manuell Abhilfe zu schaffen hat.

Der zweite große Bestandteil des Datensatzes des Standard-Ablaufplanes ist durch einen Prozess-Abschnitt 33 ausgebildet. Dieser beinhaltet die eigentlichen Daten und Datensätze 34 für die jeweiligen Prozessschritte und deren Abgleich mit dem realen Prozessverlauf. Bei der Anwendung des Standard-Ablaufplans bei der logistischen Ablaufsteuerung ist der Prozess-Abschnitt der eigentlich aktive Teil. Der Plattform-Abschnitt dient dagegen vorrangig zur Administrierung der Menge der Standard-Ablaufpläne.

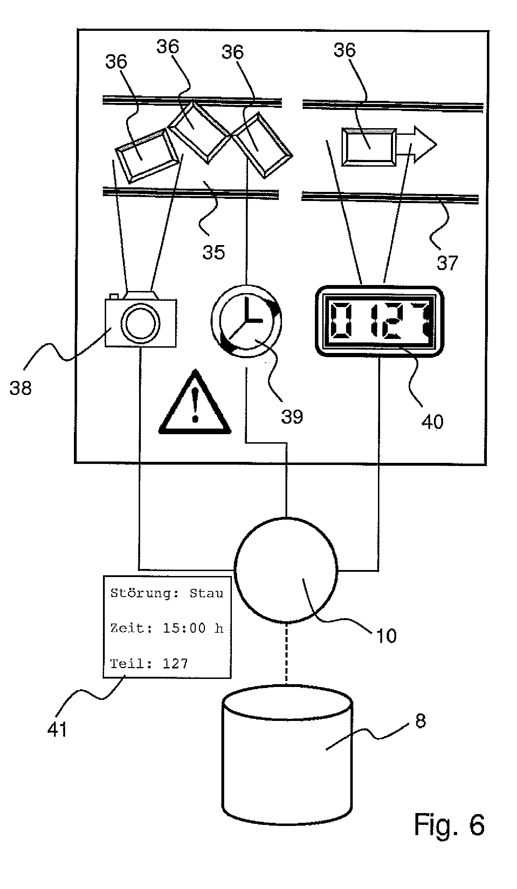

Fig. 6 zeigt an einem einfachen Beispiel eine beispielhafte Erfassung einer Belastungs- und Störungssituation bei einem beispielhaften sehr einfachen Prozess. In dem hier vorliegenden Beispiel handelt es sich im einen Prozess aus zwei Prozessschritten. In einem ersten Prozessschritt werden auf einem ersten Fließband 35 Teile 36 herangeführt und in einem zweiten Prozessschritt werden diese Teile mit einem zweiten Fließband 37 übernommen und weiter transportiert.

Gemäß den vorhergehenden Ausführungen werden beide Prozessschritte jeweils durch Endgeräte 10 überwacht. Diese sind wie beschrieben mit dem Server 8 verbunden, auf dem die Ablaufsteuerung erfolgt.

Im hier gegebenen Beispiel sind die Endgeräte am ersten Fließband 35 eine Bilderfassungseinheit 38, also eine Kamera mit selbsttätiger Objekterkennung und eine Uhr 39, die den Zeitpunkt der Übergabe der Teile 36 vom Fließband 35 auf das Fließband 37 registriert. Die beiden Endgeräte sind also darauf eingerichtet, mögliche Störungen bei der Übergabe von Band 35 auf Band 37 registrieren.

An Band 37 befindet sich als Überwachungsendgerät eine Zähleinrichtung 40. Diese zählt die auf dem Band 37 momentan weiter beförderten Teile.

Der diesem Prozess entsprechende Standard-Ablaufplan besteht in dessen Prozessabschnitt im Wesentlichen aus zwei Datensätzen. Der erste Datensatz betrifft den Prozessschritt auf dem Band 35, der zweite Datensatz den Prozessschritt auf dem Band 37. Dort ist beispielsweise als Soll-Wert für die Prozessausführung vorgegeben, dass das Band 35 die Teile mit einer bestimmten Geschwindigkeit so fördert, dass von den Teilen 36 innerhalb einer bestimmten Taktung, beispielsweise innerhalb von 2 Sekunden, ein Teil 36 vom Band 35 auf das Band 37 übergeben wird. Die Endgeräte 38 und 39 registrieren den Prozesszustand und geben die registrierten Daten fortlaufend an den Server 8 weiter. Der dort gewonnene Belastungs- und Störungszustand wird bei regulärer Prozessführung im wesentlichen aus Daten bestehen, die den Prozesszustand "ein Teil nach dem Anderen, alle 2 Sekunden ein Teil" angeben.

Der diesen Belastungs- und Störungszustand repräsentierende Belastungs- und Störungsdatensatz wird mit den Datensätzen des Standard-Ablaufplans abgeglichen. Im störungsfreien normalen Prozessverlauf ergibt sich als Resultat dieses Abgleichs, dass keine Abweichungen zwischen dem Soll-Zustand des Standard-Ablaufplans und dem Ist-Zustand des Prozesses vorhanden sind.

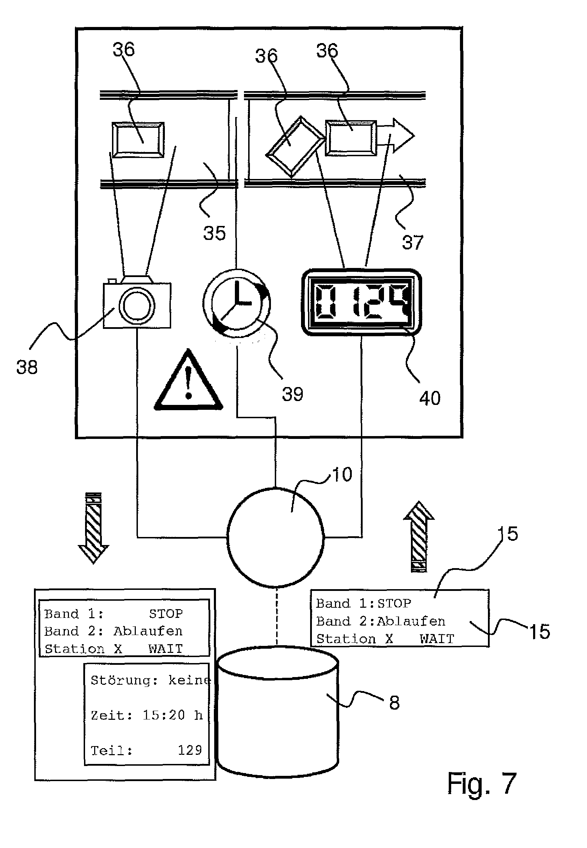

In Fig. 7 ist eine beispielhafte Ausgabe eines Entlastungs- und Entstörungsdatensatzes für die in Fig. 6 gezeigte Belastungs- und Störungssituation gezeigt.

In dem hier vorliegenden Beispiel ist es zu einem Stau auf dem Band 35 gekommen, wobei sich die Teile 36 ineinander verhaken und nicht einzeln auf das Band 37 übergeben werden können. Es besteht somit die Gefahr, dass das Band 37 mit einer zu großen Teilemenge beschickt wird, wenn der Prozess unbeeinflusst weiter läuft. Dieser Stau wird durch die Bilderfassungseinheit 38 registriert und über die Uhr 39 mit einem Zeitpunkt markiert. Der Belastungs- und Störungsdatensatz weicht nun signifikant vom Standard-Ablaufplan im Server ab. Damit ist eine Störung des Prozessverlaufs eindeutig detektiert.

In dem Server 8 wird nun ein Ausgleichsalgorithmus aktiviert, aus dem ein Entstörungs- und Entlastungsdatensatz entweder für jeden der beiden Bänder einzeln oder nur für eines der Bänder erzeugt wird. Der Ausgleichsalgorithmus für den Störungsfall "Stau" lautet dabei beispielsweise:
- erstes Band: STOP
- zweites Band: ABLAUFEN

Der dabei erzeugte Entstörungs- und Entlastungsdatensatz 15 mit den den Entstörungsanweisungen 16 für die Prozessstation an Band 35 lautet somit: STOP und enthält nur diese Anweisung. Der Entstörungs- und Entlastungsdatensatz 15 für das Band 37 lautet auch nur mit nur einer Anweisung: ABLAUFEN. Anschließend kann an beide Bänder eine WAIT-Anweisung gesendet werden, bis diese wieder in einen Takt eines übergreifenden Prozesses eingebunden werden können.

Die Rückmeldung über die Steuerung des Prozesses erfolgt in der Weise, dass der bei dem Ausführen der Entstörungsanweisungen erreichte Prozesszustand ebenfalls über die Endgeräte 10, d.h. über die Kamera 38, die Uhr 39 und den Zähler 40 erfasst und an den Server rückgemeldet werden. Dies erfolgt in Verbindung mit den Entlastungs- und Entstöranweisungen, die im vorhergehenden Verfahrensschritt an die beiden Stationen ausgegeben worden sind. Dadurch entsteht ein direkter Vergleich zwischen den Entlastungs- und Entstörungsanweisungen einerseits und dem dabei erreichten Endzustand andererseits.

Im Folgenden sollen beispielhafte Anwendungen des Verfahrens anhand weiterer Ausführungsbeispiele näher erläutert werden. Im Zusammenhang damit werden weitere Ausführungsformen für die Prozessdatenerfassung, insbesondere die verwendeten Endgeräte, beispielhaft vorgestellt.

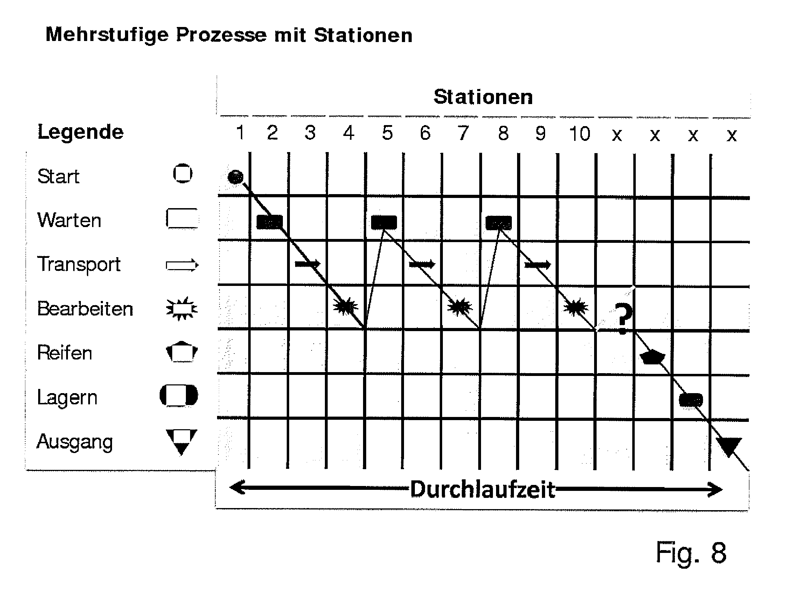

Fig. 8 zeigt eine beispielhafte Darstellung eines mehrstufigen Produktverarbeitungsprozesses aus mehreren Stationen über der Durchlaufzeit.

In Figur 8 sind die hier vorliegenden Prozessschritte als "Stationen" bezeichnet. Diese Stationen können ganz verschiedene Funktionen haben. Das reicht von dem Bearbeiten über Transportvorgänge bis zum Warten auf die Bearbeitung in der nächsten Station. Die Durchlaufzeit vom Eintritt bis zum Fertigstellen eines "Objektes" (z.B. ein Kundenauftrag, eines Patienten im Krankenhaus, einer Baustelle mit ihren Gewerken) wird dabei von einer Reihe zufälliger (stochastischer) Ereignisse beeinflusst.

Eine Ursache für Störungen kann sein, dass verschiedene Objekte um die Kapazität einer Station miteinander konkurrieren. Die Praxis zeigt, dass in vielen Fällen die Wartezeiten zwischen den Stationen die Durchlaufzeit eines Falles bestimmen. Dies trifft beispielsweise auch für die Verweildauer von Patienten in Krankenhäusern zu.

Hinzu kommt, dass die Durchlaufzeit je nach dem, um welchen Prozess es sich handelt, von äußeren Einflüssen, z.B. dem Wetter oder den Reaktionen des Objektes, insbesondere dem Patienten, nicht prognostizierbar, d.h. stochastisch beeinflusst werden kann. Die dadurch bedingten Mehrkosten bezeichnet man als sogenannte "Unruhekosten". Diese belaufen sich in der Bundesrepublik Deutschland auf viele Milliarden € jährlich.

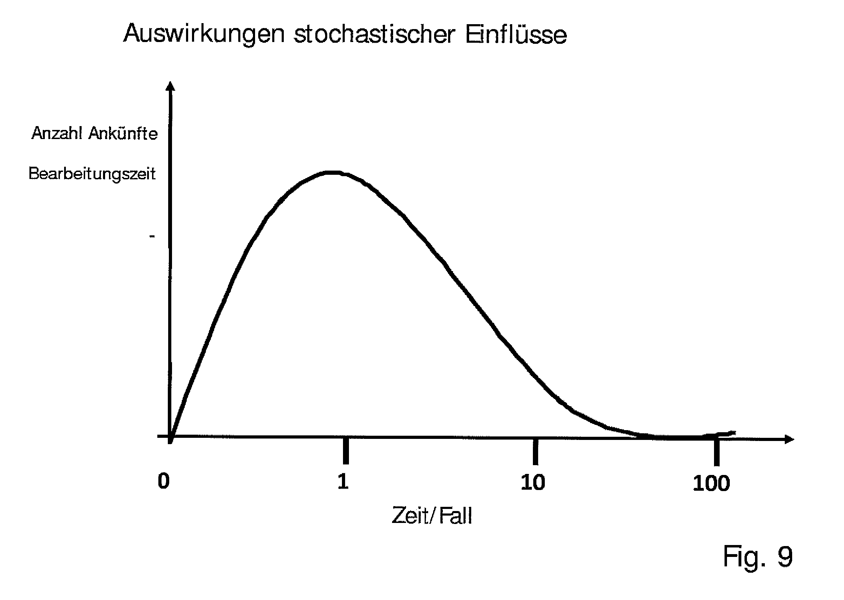

Fig. 9 zeigt in einem Diagramm die Auswirkungen stochastischer Einflüsse auf das Prozessgeschehen. Dargestellt ist hier die Anzahl von Ankünften an einem Taxistand und deren Bearbeitungszeit in Abhängigkeit von der Zeiteinheit bzw. dem Fall.

Das klassische Beispiel eines stochastischen Systems ist der Taxibetrieb: entweder wartet das Taxi auf einen Fahrgast oder der Fahrgast auf ein Taxi. Die Wartezeit ist gewissermaßen ein immanenter Teil solcher Systeme.

Da es weder bei den Ankünften noch bei den Zeiten negative Werte gibt, ähneln bei beiden die Häufigkeitsverteilung verschiedenen, bekannten mathematischen Typen wie zum Beispiel der Lognormalverteilung, Poisson-Verteilung usw. Diese weisen in der Regel ein Maximum und einen asymmetrischen Kurvenverlauf in Bezug auf das Maximum auf. Die negativen Auswirkungen der statistischen Einflüsse lassen sich mit verschiedenen Mitteln vermindern. Ein Stichwort hierzu ist insbesondere die so genannte Theorie der Warteschlangen.

Sehr schwer beherrschbar ist das Überlagern von weitgehend determinierten Systemen mit internen oder externen stochastischen Einflüssen. Beispiele dafür sind der Schienenverkehr, die Verweildauer von Patienten in Krankenhäusern. Das erfordert eine integrierte Steuerung des Durchlaufes von Objekten, internen Transporten und Auslastung von Stationen.

Eine Verknüpfung bekannter Verfahren zu einem System ermöglicht neuartige Funktionen. Welche beispielhaften weiteren Funktionen das erfindungsgemäße Verfahren ermöglicht, zeigen die folgenden Beispiele.

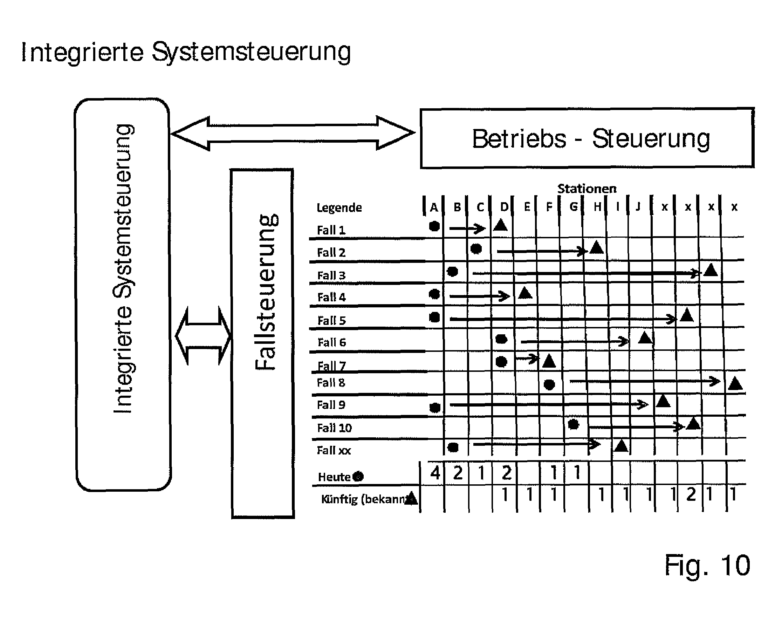

Fig. 10 zeigt, wie sich eine Reihe von Fällen in den verschiedenen Stationen und Prozessschritten überschneiden können. Dargestellt ist hier matrixartig die Ankunft verschiedener Fälle Fall 1 bis Fall XX und deren Durchläufe an einzelnen Stationen A bis X. Derartiges tritt beispielsweise in einem Krankenhaus auf, wenn Patienten eingeliefert werden und von einer Station zur nächsten oder einem Behandlungsschritt zum nächsten geschleust werden.

Bei derartigen Prozessen erfolgen die Ankünfte bei den verschiedenen Stationen sowohl geplant als auch ungeplant. In Krankenhäusern sind dies beispielweise einerseits die Notaufnahme und Ambulanz, andererseits sind Operationstermine und Vorsorgeuntersuchungen vorgeplant. Erschwerend kommt hinzu, dass wegen der Spezialisierung der Stationen noch interne Transfers notwendig sind, die zu Wartezeiten bei der jeweiligen Folgestation führen. Diese Transfers sind in der Matrix als Pfeile dargestellt. Die Summenzeilen in der Abbildung zeigen, wie es bereits in der bekannten Situation zu unterschiedlichen Auslastungen kommt.

In der Praxis gibt es viele Realsysteme, in denen zwei Arten von Prozessen miteinander verknüpft sind: (a) die zur Bearbeitung eines Einzelfalles /Kundenauftrag (Patient) erforderlichen Maßnahmen und (b) die in einer Station zusammengefassten Bearbeitungsprozesse, die in Varianten für alle zugewiesenen Fälle auszuführen sind. Verfahren zum Steuern der jeweiligen Arten von Prozessen gibt es für sich jeweils allein in der Praxis viele.

Beide Arten der Prozessteuerung sind in einem Verfahrensablauf so zusammengefasst, dass mit diesem einen Verfahren sowohl die Steuerung der Fälle als auch des Betriebes der Krankenstationen optimiert werden können. Dies geschieht durch Erfassen und Dokumentieren der Grunddaten in Echtzeit. Dadurch wird der Wirkungsgrad des Realsystems (Betrieb, Behörde, Krankenhaus) in einer bisher nicht realisierbaren Weise optimiert. Wie bei der Ausführungsform diese Funktionen erfüllt werden, stellen die folgenden Abschnitte dar.

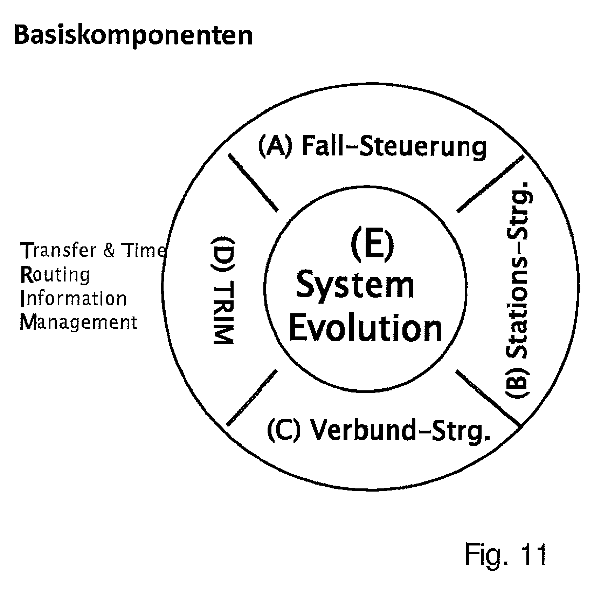

Fig. 11 zeigt wichtige Basiskomponenten des Ausführungsbeispiels. Die wichtigsten Komponenten stellen dabei eine Fallsteuerung und eine Stationssteuerung sowie eine Verbundsteuerung dar. Diese drei Komponenten realisieren dabei die oben genannte Prozesssteuerung. Die Fallsteuerung umfasst den Ablauf und die Dokumentation eines Falles von seiner Entstehung über den geplanten und stochastisch veränderten Ablauf bis zur Dokumentation der Ergebnisse.

Die Stations-Steuerung zeigt eine aktuelle, zu erwartende Belastung der Station aus Planung und erwarteten stochastischen Veränderungen. Daraus ergibt sich die resultierende Belastung nach wichtigen Ressourcen.

In Verbindung damit betrifft die Verbund-Steuerung Möglichkeiten und erforderliche Maßnahmen zum Ausgleich der Anforderungen und Möglichkeiten aus Fällen und Kapazitäten für Gegenwart, Vergangenheit und Zukunft.

Die Fallsteuerung ist somit fallspezifisch angelegt. Sie betrifft die Optimierung einer Patientendurchschleusung im Krankenhaus. Die Stationssteuerung ist typspezifisch ausgelegt. Sie betrifft die Prozesssteuerung auf der Ebene der Station und ist nicht fallspezifisch. Die Verbundsteuerung ist archivarisch und auf eine langfristige Optimierung angelegt. Hierzu werden insbesondere Daten aus früheren Prozesslagen mit übernommen.

Die TRIM-Funktion enthält die Mittel zum Ausführen des Abgleichs gemäß der Komponenten. TRIM steht dabei als Abkürzung für Transfer & Time Routing Information Management. Dieser Teil des Verfahrens umfasst insbesondere die im Verfahrensablauf benutzten Endgeräte, deren Zusammenwirken und deren Datenerfassung und Datenspeicherung.

Das Verfahren ist bei diesem Ausführungsbeispiel evolutiv angelegt. Es werden relevante Abweichungen zwischen einer Verfahrenskonfiguration und tatsächlichem Verfahrensablauf registriert und ein Fortschritt der Prozessgestaltung und des Verfahrens initiiert. Dies betrifft insbesondere eine selbst lernende Konfiguration.

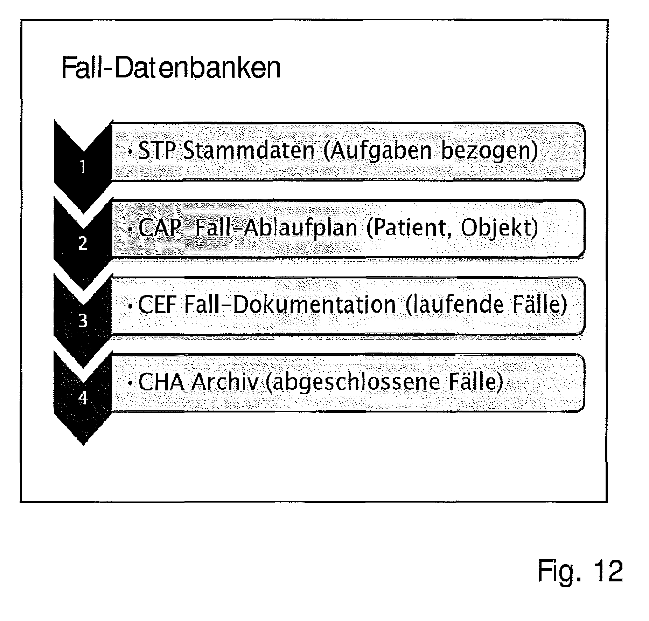

In Fig. 12 ist eine weitere beispielhafte Struktur der Datenbank dargestellt. Die Datenbank besteht hier aus vier Komplexen. Diese vier Datenbanken sind die Grundlage für das Planen, das integrierte Steuern und das Ausführen von Aufgaben nach bestimmten Gruppen und Schritten wie z. B. Krankheitsfälle in einer Klinik nach DRG, Kundenaufträge im Maschinenbau nach Typen. Durch das Archivieren ist es auch möglich, die Validität der Stammdaten zu überwachen und diese gegebenenfalls zu adjustieren. Im hier vorliegenden Fall liegen folgende Datenbanken vor:
STP = Standard Task Procedure: Richtlinien nach Aufgaben (Medizin: DRG), gegliederte Stammdaten für das Ausführen von Aufgaben (Arbeitsschritte, Zeitbedarf, Ressourcen etc.). Der STP stellt einen Standard-Ablaufplan dar.
CAP = Case Adapted Plan: Auf den speziellen Fall angepasster STP mit Angaben von Terminen etc. für die einzelnen Schritte. Durch die CAP-Datenbank wird eine adaptive Anpassung der STP-Daten auf spezifiche Einzelfälle erreicht.
CEF = Case Execution File: Aufzeichnungen über den effektiven Ablauf der Arbeitsschritte als Dokumentierung.
CHA = Case History Archive: Archiv der abgeschlossenen Fälle mit Plan- und Istwerten einschl. eventuelle Sprachaufzeichnung. Die CHA-Datenbank stellt somit das "Gedächtnis" der übrigen Datenbanken dar.

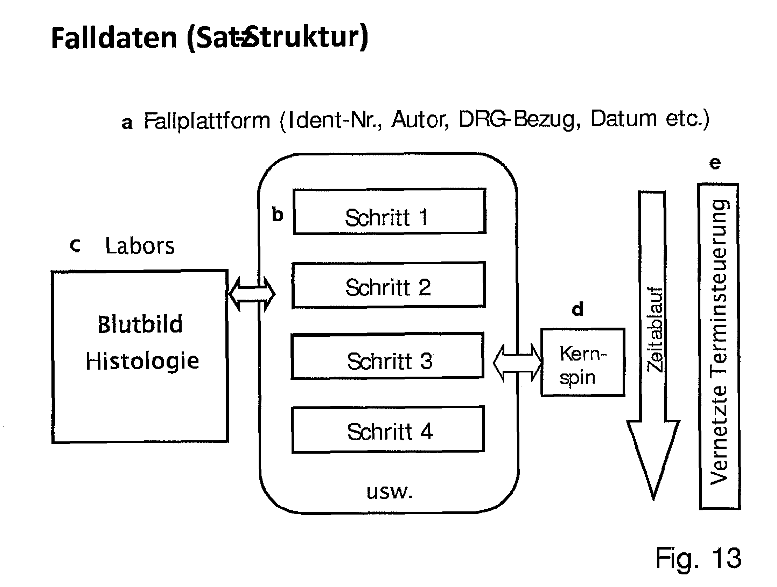

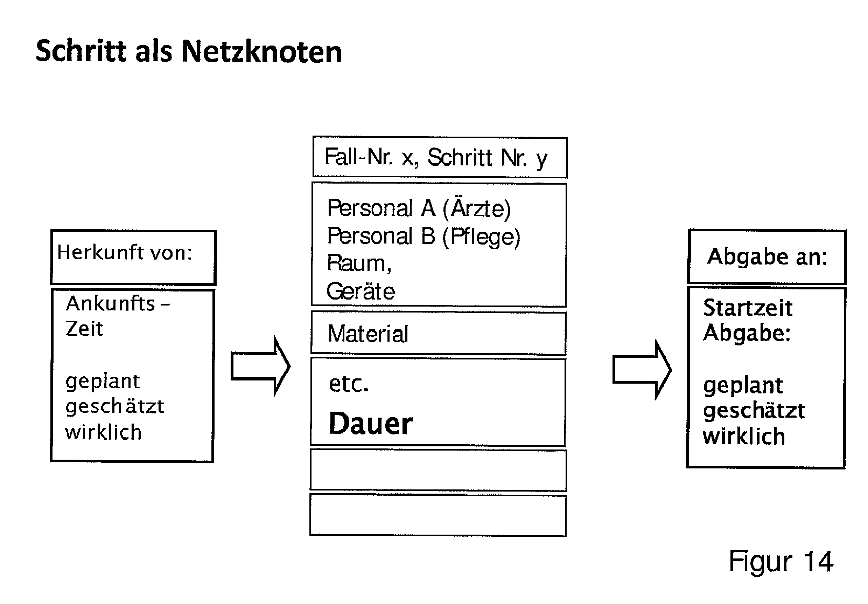

Zum Verknüpfen der in Fig. 12 aufgezählten Datenbanken ist es erforderlich, dass diese eine gemeinsame Satzstruktur aufweisen. Diese ist beispielhaft in Fig. 13 dargestellt und wird wie folgt erläutert:
a) Die Fallplattform dient einem Identifizieren einer Fall-Gruppe oder des einzelnen Falles (beispielsweise Patient zur Behandlung, Kundenauftrag etc.). Die Plattform enthält ferner alle wichtigen Daten hinsichtlich Urheber, Art und Datum von Änderungen, Zuständigkeiten und Verantwortung.
b) Das Ausführen des Falles ist in eine Reihe von Schritten gegliedert. Deren Aufbau wird in der folgenden Fig. 14 dargestellt.
c) Der Schritt 2 beinhaltet in diesem Beispiel, dass ein Fall warten muss, bis Informationen von einer anderen Stelle vorliegen (z. B. Laborwerte, Gutachten).
d) Der Schritt 3 zeigt beispielhaft, dass das Objekt des Falles (Patient, Werkstück) zu einer anderen Station zwecks Diagnose oder Behandlung gebracht werden muss.
e) Hier wird gezeigt, wie die Verweildauer von einer vernetzten Terminsteuerung der Fälle und Stationen abhängig ist.

Die Anzahl der Schritte ist natürlich nicht begrenzt und nur durch den jeweils vorliegenden Einzelfall bestimmt.

In Fig. 14 ist beispielhaft dargstellt, welche Informationen ein jeweils in Fig. 13 gezeigter Schritt in den Datenbänken enthalten sein kann, damit die in Fig. 13 genannte integrierte Systemsteuerung möglich ist.

Ein erster Datensatz beinhaltet die Herkunft vom vorhergehenden Schritt und den geplanten, geschätzten und tatsächlichen Ankunftszeiten. Dieser Datensatz vermittelt den Anschluss an den vorhergehenden Prozessschritt. Weiterhin sind Angaben zum Identifizieren das Falles und Schrittes vorgesehen sowie benötigte, wichtige Ressourcen nach Arten, bis zur Dauer zwischen Ankunft und Abgabe. Dies betrifft im hier vorliegenden Beispiel Personal, aufgeschlüsselt nach Kategorien, Raumangaben und Geräteangaben. Bedeutsam ist, dass detaillierte Angaben über den Bedarf an Ressourcen und die Art der Behandlung bei der zuständigen Station entfallen können, wenn die Ausführung des Schrittes bei einer anderen Station erfolgt. Dies ist beispielsweise in Schritt 3 bei der vorhergehenden Figur der Fall. Diese Angaben obliegen der ausführenden Station. Die Dauer ist jedoch für die integrierte Planung und Steuerung erforderlich und wird somit als relevantes Datum bei dem hier vorliegenden Schritt mit berücksichtigt.

Den Abschluss bilden die Zeitangaben über den Start zur Abgabe an den nächsten Schritt (wiederum geplant, geschätzt und tatsächlich). Diese Daten schließen an den nachfolgenden Prozessschritt an.

Es ist einsichtig, dass die Datenmenge an jedem einzelnen Schritt einen anderen Umfang haben kann. Schritte, die nicht als Netzknoten oder Verzweigungen zu Nachbarprozessen angelegt sind und die reine "Durchgangsstationen" bilden, enthalten möglicherweise nur Ankunfts- und Abgabezeiten.

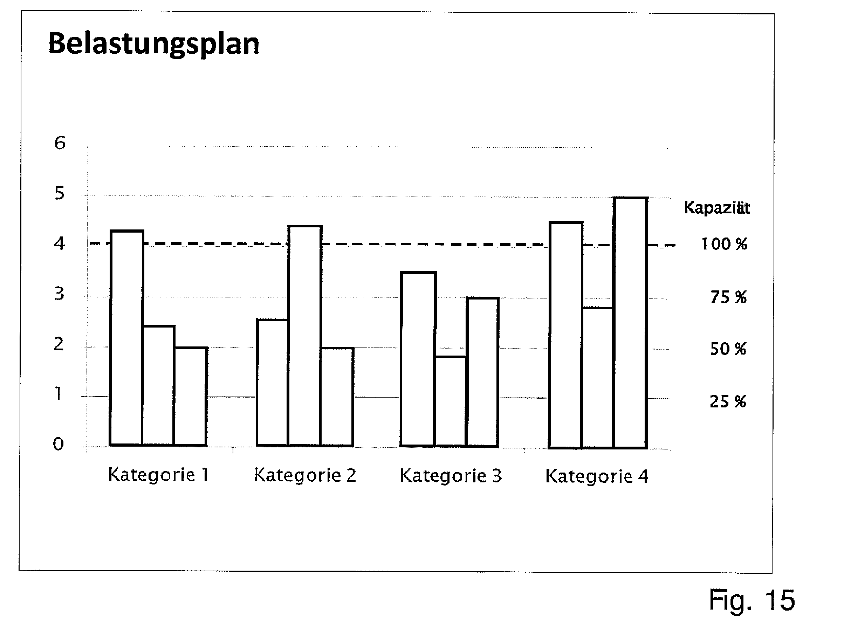

Die vorhergehenden Figuren stellten wichtige Funktionen der Basiskomponente A (Fall-Steuerung) gemäß der Erfindung dar. Die nun in Fig. 15 dargestellte Komponente B zeigt die Belastung, die aus der Fallsteuerung ermittelt wird. Die momentane Belastungssituation wird beispielsweise durch ein Umsortieren der in A erfassten Daten nach Stationen, Art der Ressourcen und Zeit errechnet.

Bei den einzelnen Schritten zum Ausführen eines Falles sind alle wesentlichen Gesichtspunkte zum Planen, Ausführen und Dokumentieren zusammengefasst. Es ist jedoch nicht notwendig, diese einzelnen Daten in ihrer gesamten Breite in aller Ausführlichkeit zur gesamten Abfrage des Prozesses heranzuziehen. Wichtig sind jedoch die Anschlussdaten, d.h. der Output eines Prozessschrittes und der in den nächsten Prozessschritt eingehende Input. Damit werden im Wesentlichen nur die Anschlussdaten angegeben und liegen als eine Art "Stückliste" vor.

Der Schritt, d.h. die darunter liegende Datenbankstruktur, erfüllt auch zusätzlich eine Verknüpfungsfunktion. Diese besteht darin, dass jede Veränderung in der Konfiguration oder in den Daten eines Schrittes auf die Konfiguration nachfolgender Schritte übertragen wird. Dies betrifft im einfachsten Fall Zeitdauern. Wenn die Zeitdauer für einen Schritt um einen Differenzbetrag verlängert oder gekürzt wird, werden die Startzeiten der nachfolgenden Prozesse entsprechend verschoben. Diese Verknüpfung kann auch die Resultate des Schrittes und aller nachfolgenden Schritte betreffen. Das ist vor allem dann der Fall, wenn der neu überarbeitete Prozessschritt ein Resultat hervorbringen soll, bei dem eine Eigenschaft nicht mehr benötigt wird. Dann überträgt sich diese verminderte "Checkliste" automatisch auf die nachfolgenden Prozesse. Der Sinn hierbei ist, dass die innere Konsistenz und Widerspruchsfreiheit des Ablaufplanes gewahrt wird, sodass keine scheinbaren Prozessstörungen erzeugt werden.

Die einzelnen "Kategorien" in Fig. 15 können zum Beispiel die sich aus der Summe der Fälle ergebenden Anforderungen sein. Der genaue Inhalt der Kategorien richtet sich nach dem jeweils vorliegenden Prozess bzw. dem jeweils vorliegenden Prozessschritt.

So kann die Kategorie 1 beispielsweise im ersten Balken die zeitliche Anforderung an ärztlichem Personal darstellen, im zweiten Balken die Anforderungen an den Pflegedienst und im dritten Balken den Bettenbedarf bedeuten. Die Kategorie 1 steht hier beispielhaft für den Zeitraum der laufenden Woche, die Kategorien 2 und 3 sinngemäß für die folgenden Wochen. Die Anzeige kann relativ in Prozent der jeweils verfügbaren Kapazität erfolgen.

Andere Sortierkriterien sind beispielsweise die zeitlichen Anforderung an Ärzte und Pflege durch verschiedene Fälle an einem bestimmten Tag.

Grundlage sind die Inhalte der Zellen der Datenbanken gemäß den Figuren 13 und 14.

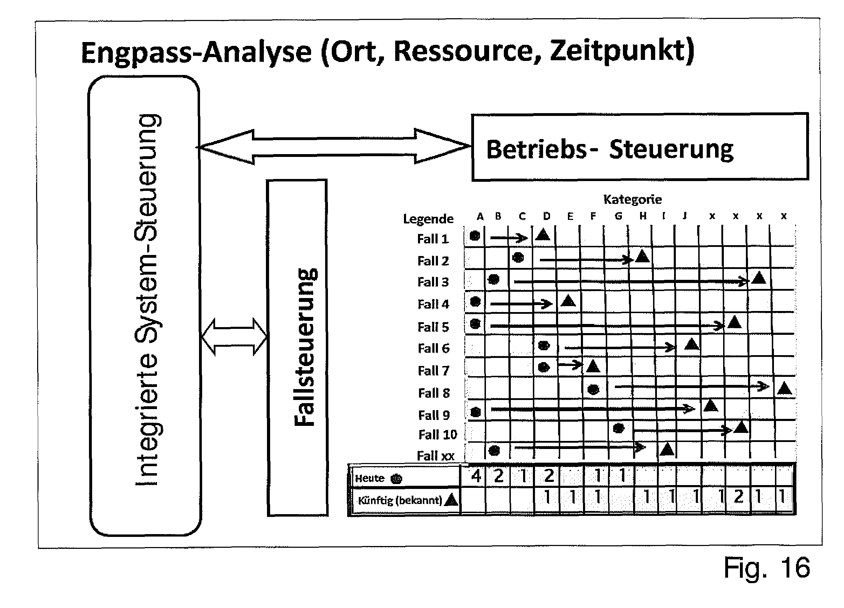

Fig. 16 zeigt eine leicht abgewandelte Darstellung der Figur 10 hinsichtlich der Integration von Fall- und Systemsteuerung. Aus dem Zusammenfassen der beiden Komponenten Fall- und Systemsteuerung ergibt sich zunächst ein Überblick über den Bedarf an Ressourcen in verschiedenen Zeitabschnitten.

Dieser matrixartige Überblick allein ermöglicht es aber bei komplexen Systemen nicht, den Ausgleich zwischen den Anforderungen der Fälle und Stationen durchzuführen. Die Struktur der Komponenten und deren Verknüpfungen ermöglicht aber den Einsatz von datenverarbeitenden Systemen für diesen Zweck. Diese sind beispielsweise von Schachcomputern oder aus Verfahren des Operation Research bekannt.

Wie dies durch die Erfindung im Verknüpfen der Komponenten erreicht werden kann, wird später am Beispiel der Anwendung im Krankenhaus gezeigt. Als nächstes werden beispielhaft Instrumente und Struktur der "Coin"- und TRIM-Komponente dargestellt.

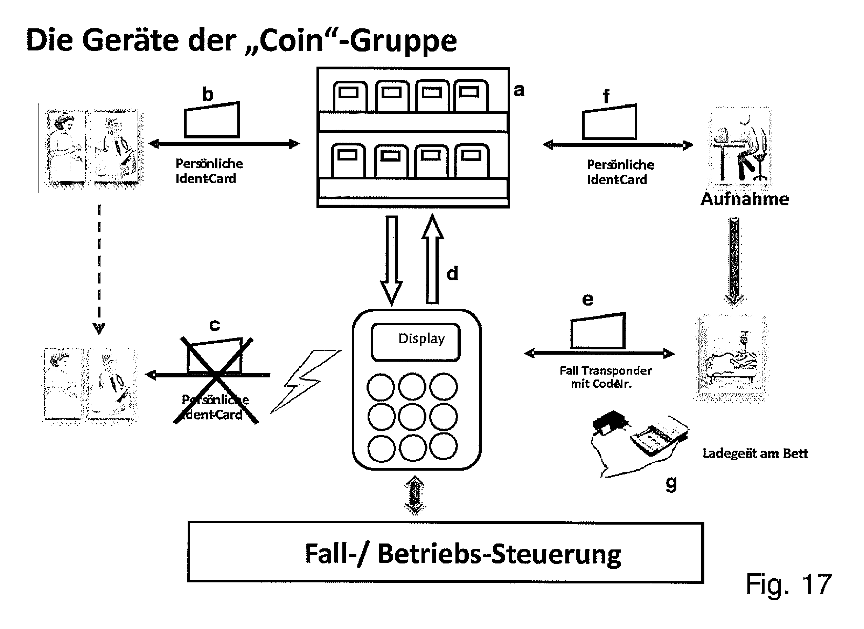

Fig. 17 zeigt beispielhafte Elemente einer so genannten Coin-Gruppe. Coin steht hierbei als Akronym für die Bezeichnung "communication interface network" oder Kommunikations-Netzwerkoberfläche. Diese Gruppe bildet die Bausteine einer Brücke zur Kommunikation zwischen den am System beteiligten Nutzern einerseits und dem Steuerungssystem andererseits. Beispiele aus dem Bereich der Krankenhäuser sind in Fig. 17 wie folgt aufgeführt:
a) Eine Zuweisestation zum Entnehmen, Abgeben und Laden der Geräte in einem vom Benutzer neutralisierten d.h. nicht personalisierten Zustand,
b) Bei der Entnahme wird das Gerät für den Benutzer über seinen Transponder, PIN und eventuell seinem Fingerabdruck mit den für ihn notwendigen Daten personalisiert.
c) Wird der Funkkontakt zwischen dem Benutzer, d.h. seinem Transponder, und dem Coin-Gerät unterbrochen, ist kein Betrieb möglich.
d) Bei Rückgabe wird das Gerät neutralisiert, d.h. wieder in den nicht personalisierten Zustand zurückversetzt.

Diese, vorwiegend auf ein Dienstpersonal (z.B. das Personal eines Krankenhauses) zugeschnittenen Mittel werden hier durch weitere Mittel ergänzt, die kundenspezifisch ausgelegt sind, insbesondere die einem Patienten zugeordnet sind.
e) diese Geräte, die z.B. für Patienten vorgesehen sind, arbeiten nach den gleichen Bedingungen.
f) die Patientengeräte werden von der Aufnahmestation vergeben und ebenfalls personalisiert.
g) zweckmäßigerweise werden die Patientengeräte am Bett des Patienten geladen.

Diese Geräte ermöglichen in ihrer Gesamtheit eine dichte Kontrolle insbesondere darüber, welche Terminabweichungen bzw. Verzögerungen beim Personal und beim Patienten auftreten. Dies geschieht vor allem über die Erfassung relevanter Abweichungen von einer erwarteten Ankunftszeit (expected time of arrival ETA).

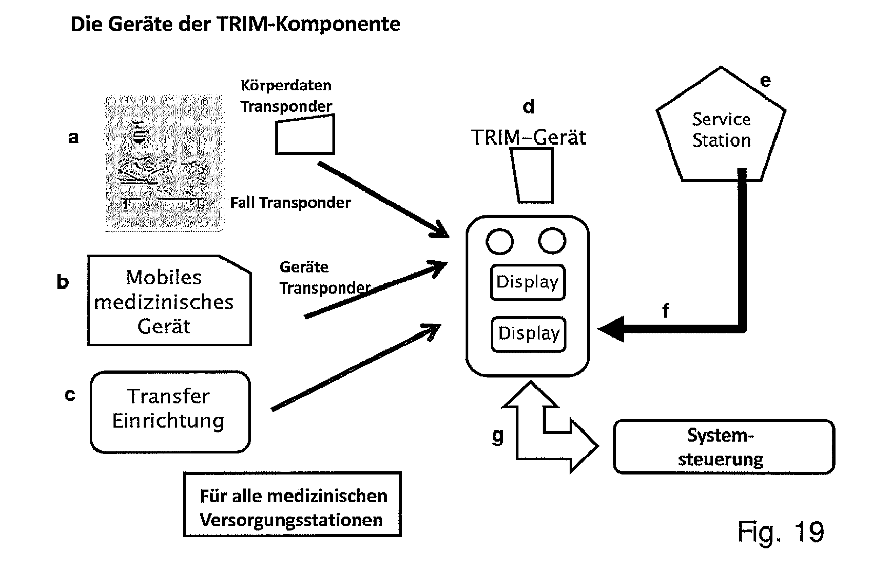

Fig. 19 zeigt eine beispielhafte Verknüpfung der Fälle und Stationen eines Systems, in diesem Beispiel wieder anhand einer Anwendung im Krankenhausbereich. Die TRIM-Geräte dienen den medizinischen Versorgungsstationen zur Minimierung der Belastung und zum Sichern der Schnittstellen wie folgt:
a) Das Überwachen der Körperdaten von Patienten erfolgt hier mittels Transpondern,
b) Ein Einsatz von mobilen medizinischen Geräten (EKG, Ultraschall etc.) am Bett des Patienten ohne dessen Transport,
c) Es erfolgt ein Sichern der Schnittstelle und eine Zeiterfassung bei einem Transport zwischen Stationen des Hauses. Die Transporteinrichtung kann hier beispielsweise ein Rollstuhl oder eine Krankenliege sein, die verfolgbar ausgebildet ist.
d) Die TRIM-Geräte haben Anschlüsse für den jeweiligen Zweck und die verwendete Technik. Dies sind insbesondere Mittel zum Einschieben von Chipkarten, WLAN, Bluetooth usw.,
e) Das Lagern, die Wartung und die Kontrolle der Ein- und Ausgabe der TRIM-Geräte erfolgt durch eine Servicestation. Hier ist die Personalisierung und die Neutralisierung mit inbegriffen.
f) Die Personalisierung des Gerätes erfolgt hinsichtlich der Einsatzart und der Station durch die Servicestation. Die Fall-Nr. und die ausführende Person werden in der Station erfasst.
g) Alle relevanten Daten und Ergebnisse werden in der Systemsteuerung gespeichert.

Die Endgeräte können neben der Zustandserfassung des Prozesses in gewissem Umfang auch dazu genutzt werden, um einen an sich reibungslos ablaufenden Prozess flexibel anzupassen noch bevor Friktionen im Prozess auftreten. Die kann beispielsweise dadurch realisiert werden, indem ein dem Patienten zugeordnetes und auf ihn personalisiertes Endgerät gewisse Auswahlmöglichkeiten für einzelne Behandlungs-, Aufenthalts- oder Verpflegungsmodi aufweist, aus denen der Patient wählen kann. Diese Eingaben stellen dann fallspezifische Parameter für die Systemoptimierung dar, die bereits dann einsetzt, wenn der Patient in das Krankenhaus eingeliefert wird.

Die Endgeräte können dem Patienten bei dessen Einlieferung übergeben werden, beispielsweise als personalisierte Tablet Computer oder in Form eines anderen Mediums.

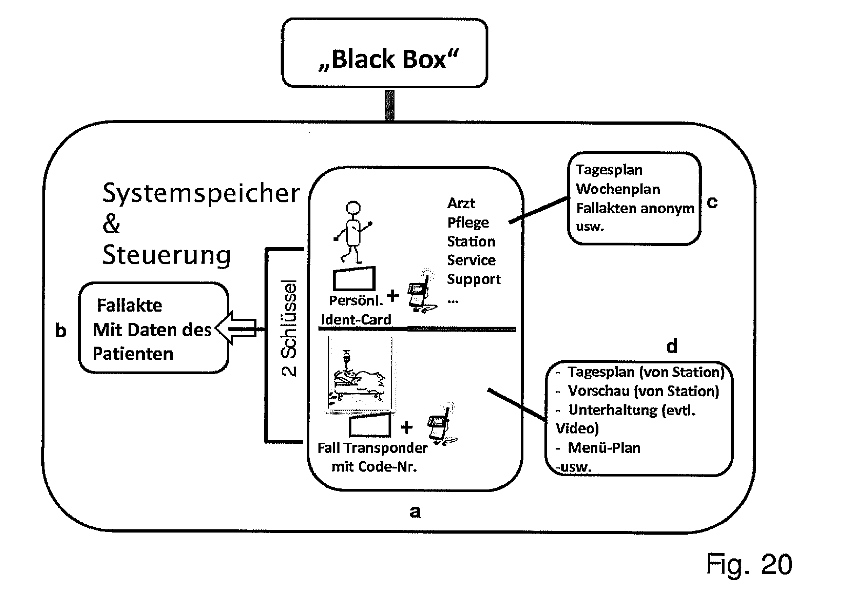

Fig. 20 zeigt Ausgestaltungen hinsichtlich des Datenschutzes: Dies ist bedeutsam, weil es Situationen geben kann, in denen der Datenschutz eine ganz besondere Rolle für den Erfolg spielt. Der Schutz der persönlichen Daten des Patienten ist beispielsweise ein Grundsatz der Architektur des Steuerungssystems. Wie beim Beispiel der Flugsicherheit mit dem Flugschreiber, wird auch hier das "Black Box" Prinzip angewandt. Dazu dient folgende Vorgehensweise:
a) Alle persönlichen Daten werden in einer Datei gespeichert. Alle Informationen der Fallakte und sonstige Daten, die den Fall betreffen, sind in einer getrennten Datei erfasst. Um beide Dateien zusammenzufassen, werden zwei "Schlüssel" (PIN, Fingerabdruck) von speziell dazu autorisierten Personen benötigt.
b) Die Datei der persönlichen Daten ist in einer besonderen Form ohne Zugang an das WLAN, Internet, eMail etc. gespeichert, d.h. hart von externen Eingriffen getrennt.
c) Dem Patienten stehen mit Hilfe seines Transponders nur die für seinen Gebrauch wichtigen Daten zur Verfügung.
d) Für die Fallsteuerung als solcher ist nur die elektronische Falldatei mit der Fallsteuerung verfügbar. Jeder Zugriff ist nur den für diesen Fall autorisierten Personen möglich. Für die Betriebsteuerung wird die Fallnummer durch einen anderen Code ersetzt, der keinen Rückschluss auf den echten Fall erlaubt, aber die statistische Auswertung ermöglicht.

An dieser Stelle sei noch einmal die zentrale Bedeutung der Evolution des gesamten Systems betont. Für die Systeme zur Steuerung gemischt deterministischer /stochastischer Prozesse kommt es darauf an, dass das Koppeln der Stufen einer Evolution in Form eines Wahrnehmens, Beurteilens, Entscheidens und Bewegens erfolgt. Welche Methoden und Instrumente dabei eingesetzt werden sollen, beschreiben die folgenden Beispiele.

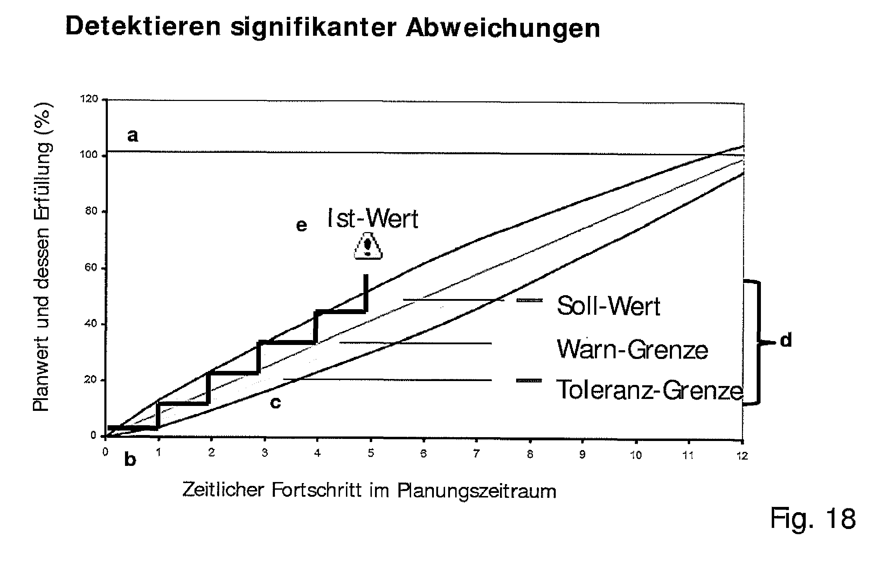

Als Beispiel für das Wahrnehmen von Abweichungen sind die Zugänge in der Ambulanz gewählt wie in Fig. 18 dargestellt. In derartigen Bereichen treten große Zufallsschwankungen auf.
a) Als 100% sind die Zugänge im Durchschnitt eines Wochentages (jeweils Montag bis Sonntag) mit Berücksichtigung des saisonalen Faktors des jeweiligen Monats (Januar bis Dezember) dargestellt. Bewegliche Feste und Sonderveranstaltungen sind berücksichtigt.
b) Die zwölf Abschnitte im Planungszeitraum können beispielsweise die 12 Stunden von 8 Uhr bis 20 Uhr eines Tages sein.
c) Der treppenförmige Graphenverlauf zeigt die kumulierten Istwerte in der Summe seit Tagesbeginn.
c) Die jeweiligen Toleranzgrenzen sind vorab aus der Erfahrung und/oder mittels statistischer Datensammlung ermittelt.
d) Im hier vorliegenden Beispiel zeigt der kumulierte Istwert nach einer gewissen Zeit eine signifikante (mit 95% Wahrscheinlichkeit) nicht zufällige

Abweichung. Das deutet auf das Vorliegen eines Handlungsbedarfs hin. Dessen Stärke wird in einem nachfolgenden Schritt ermittelt.

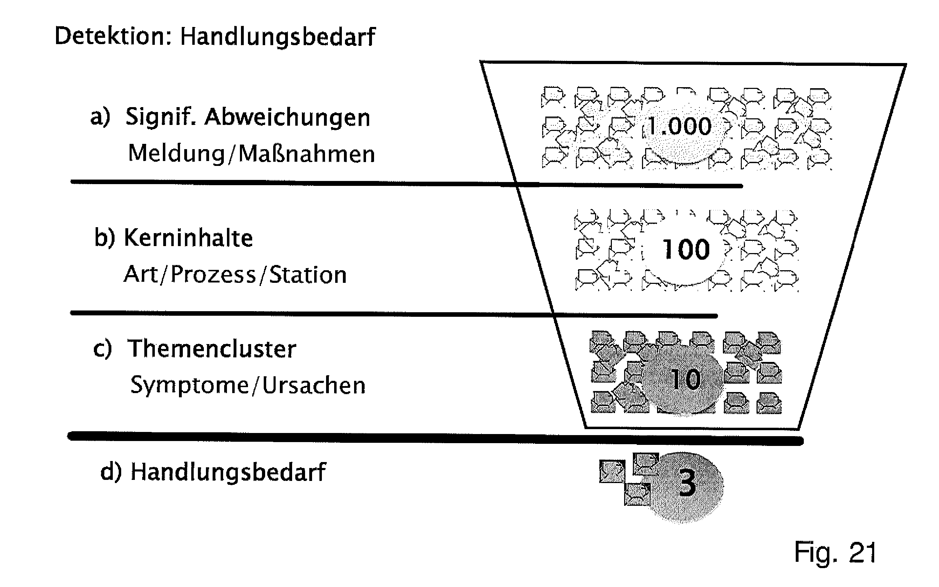

Fig. 21 zeigt ein beispielhaftes Detektieren eines Handlungsbedarfs: In vielen Fällen lassen sich aus einzelnen, signifikanten Abweichungen weder die Ursachen noch die Bedeutung der Abweichung für das Gesamtsystem erkennen. Deshalb werden im Steuerungssystem alle signifikanten Abweichungen über einen gewissen Zeitraum gespeichert und anschließend ausgewertet. Dies erfolgt in vier Schritten:
a) Signifikante Abweichungen des betreffenden Zeitraums werden dem Speicher entnommen und für die Auswertung aufbereitet, insbesondere skaliert, normiert und formatiert.
b) Kernthemen werden mit der Methode "Keyword in Context (KWIC)" ermittelt. Dabei geht es insbesondere darum, die mit dieser Abweichung sonst noch anfallenden Fehlermeldungen zu erfassen und zu ermitteln, inwiefern die signifikante Abweichung tatsächlich als relevant einzustufen ist.
c) Themencluster werden mit statistischen Methoden ermittelt und beurteilt. Dabei geht es insbesondere darum, die KWIC so miteinander zu verknüpfen, dass sich daraus ein Gesamtzusammenhang ergibt.
d) Sodann wird der Handlungsbedarf entschieden und in folgende Kategorien eingestuft: A. Sofortmaßnahmen: diese können ohne großen Aufwand ausgeführt werden, B. Schlüsselprogramme, die für den Gesamtprozess von ausschlaggebender Funktion sind, C. Strategischen Initiativen, die meistens übergreifende Lösungsansätze erfordern.

Ein wichtiger Aspekt bei der Ermittlung des Handlungsbedarfs und darüber hinaus bei dem gesamten Verfahrensablauf sind insbesondere Verspätungen. Verspätungen sind ein wichtiger Prozessparameter, anhand dem sich Prozessstörungen zeigen, denn in einem solchen Fall wird der Fluss der Prozessschritte unterbrochen und es entstehen unnötige Wartezeiten. Wesentlich ist es, den Grund und die Ursache der Verspätung zu ermitteln.

In einem solchen Beispiel wird gemäß den eben aufgeführten Schritten zuerst über die Endgeräte die Verspätung festgestellt. Dies erfolgt im einfachsten Fall durch einen Vergleich zwischen einer gegebenen Soll-Zeit und einer gemessenen Ist-Zeit. Die in diesem Zusammenhang gesammelten Key Words in Context weisen z.B. darauf hin, dass ein erhöhtes Patientenaufkommen in Station X vorliegt, wobei andere Kontexte nicht auftauchen. Die Verspätung wird somit auf eine entsprechende Unterbesetzung der Station zurückzuführen sein. Andere Key Words in Context zeigen zum Beispiel auch einen Leerlauf in einer anderen Station an oder das Fehlen bestimmter Mitarbeiter an einem Ort. Diese Keywords können mittels der Datenbank verknüpft werden, sodass der dabei gebildete Themencluster sowohl die Unterbesetzung als auch den Leerlauf und den fehlenden Mitarbeiter zeigt. Resultierend daraus wird in der Datenbank eine Sofortmaßnahme in der Weise generiert, indem entweder ein Mitarbeiter aus der unterbeschäftigten Station in die stark frequentierte Station beordert wird, wobei dieser ein Signal auf seinem Endgerät empfängt, oder indem nach dem fehlenden Mitarbeiter ein Suchaufruf gestartet wird.

Solch ein Vorgehen wird umso genauer, je dichter und umfangreicher der Themencluster im fortlaufenden Betrieb der einzelnen Stationen erfasst worden ist. Dann kann das Verfahren zur Ablaufsteuerung auf genau diese Themencluster zurückgreifen und darauf abgestimmte Lösungsstrategien generieren.

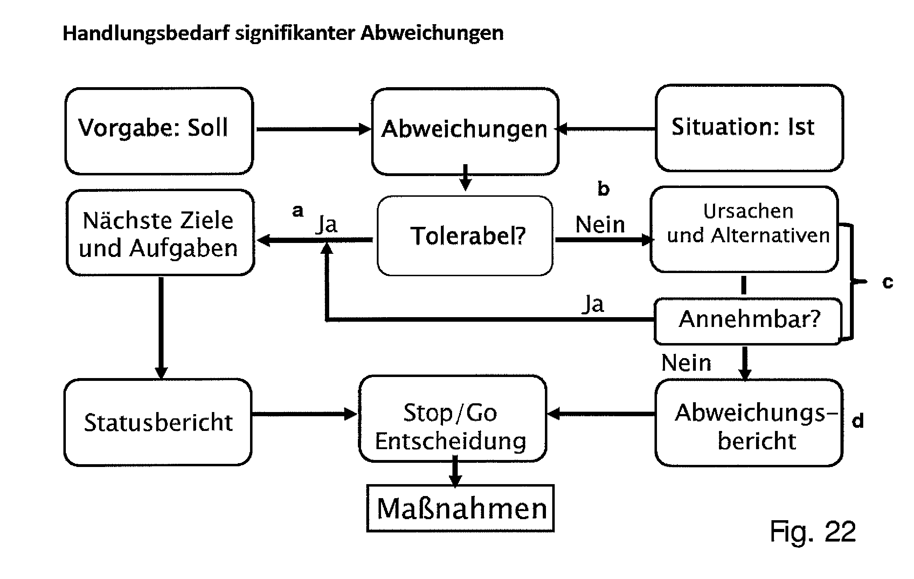

Fig. 22 zeigt einen beispielhaften Verfahrensablauf zum Ermitteln eines Handlungsbedarfs.
a) Ob bei einer signifikanten Abweichung Handlungsbedarf besteht, ergibt sich aus der Situation des Falles oder des Betriebes. Dies ist hier am Beispiel eines verminderten Patientendurchsatzes in einer Ambulanz gezeigt. Im vorliegenden Beispiel könnten die verfügbaren Daten etwa trotz hoher Zugänge nahelegen, dass die Wartezeit in der Ambulanz noch tolerabel ist.
b) Ist die Abweichung nicht tolerabel, wird nach Alternativen zum Handhaben der Situation gesucht. So könnte beispielsweise in der Aufnahme ein weiterer Kanal zum Reduzieren der Wartezeit eröffnet werden.
c) Wird keine solche gefunden, so ist die Abweichung in ihren Faktoren (Größe, Ursachen, Alternativen) einem dafür zuständigen Gremium zur Entscheidung vorzulegen. Das geschieht durch die erwähnte Ausgabe an das Dispatcher-Endgerät.
d) Der daraus resultierende nun "von Hand" ausgearbeitete Notfallplan wird im Steuerungssystem registriert und der weitere Verlauf dementsprechend verfolgt. Das gilt für Abweichungen bei Fällen ebenso wie für den Betriebsablauf im Allgemeinen. Die Anzahl und Art dieser Vorfälle ergibt Hinweise auf ein notwendiges Neugestalten von Prozessen. Sie sind Grundlage strategischer Initiativen und einer gesteuerten Evolution.

Ein System ermöglicht durch das Zusammenfügen seiner Komponenten neue Funktionen, die keine einzelne seiner Komponenten für sich allein erfüllen könnte. Das gilt für die Bauleitung eines Großprojekts im Steuern der einzelnen Gewerke, das Justizsystem oder einer Fabrik genauso, wie für ein Krankenhaus.

Die Prioritäten der auszuführenden Schritte und des Handlungsbedarfs können auf einer internen Skala standardisiert sein, um hier ein hinreichend genaues Raster, aber auch eine ausreichend deutlich wahrnehmbare Abstufung zu ermöglichen. Insbesondere ist eine an die Luft- und Seefahrt angelehnte Abstufung nach "Normal", "Pan-Pan" oder "Mayday" möglich. In Verbindung damit können auf der Geräteebene Konsequenzen für einen Missbrauch des Systems vorgesehen sein, etwa in dem eine dauerhafte Sperre über einen Nutzer verhängt wird.

Um dieses Zusammenwirken der Komponenten des Systems der Erfindung anschaulich darzustellen, ist das Anwenden des Systems gemäß der Erfindung im Folgenden am Beispiel des Krankenhauses dargestellt.

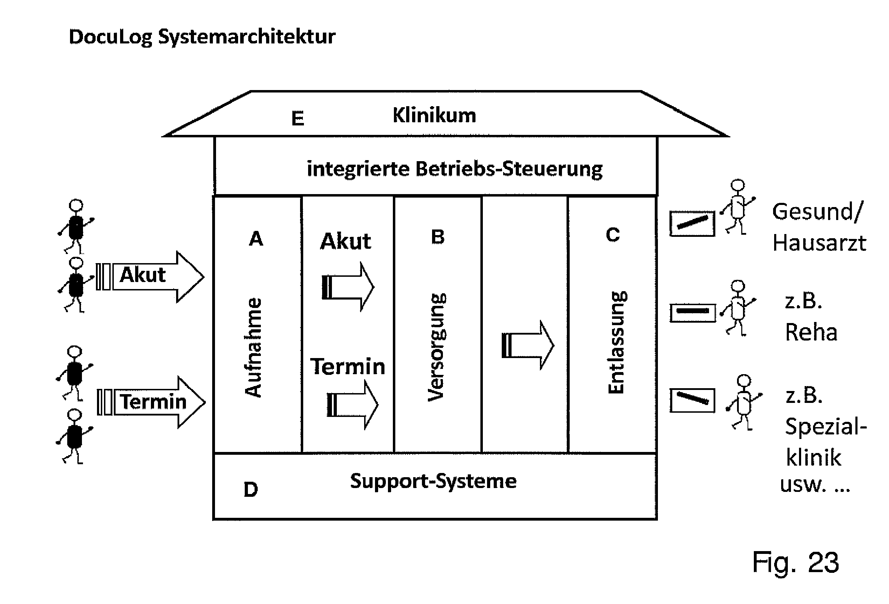

Figur 23 zeigt am Beispiel eines Krankenhauses den modularen Aufbau eines erfindungsgemäßen Aufbaus zum Steuern gemischt deterministischer/stochastischer Prozesse. Dieser beruht auf einer mehrjährigen Studie. In dieser ist der Handlungsbedarf aufgrund von 10.000 Aussagen in folgenden Modulen handhabbar gemacht:
Modul A, Aufnahme: Dies betrifft sowohl ambulante Fälle als auch die Nachfrage nach Terminen als auch stochastische Anteile wie auch für deterministische Fälle (Operationen, Vorsorge).
Modul B, Versorgung: Akuter wie terminierter Fälle.
Modul C, Entlassung: ambulanter wie stationärer Fälle.
Modul D, Supportsysteme: z.B. Küche, IT-Systeme, Apotheke.
Modul E, Integrierte Betriebssteuerung nach Station und Funktion.

Der Inhalt der Module ist in den folgenden Ausführungen dargestellt.

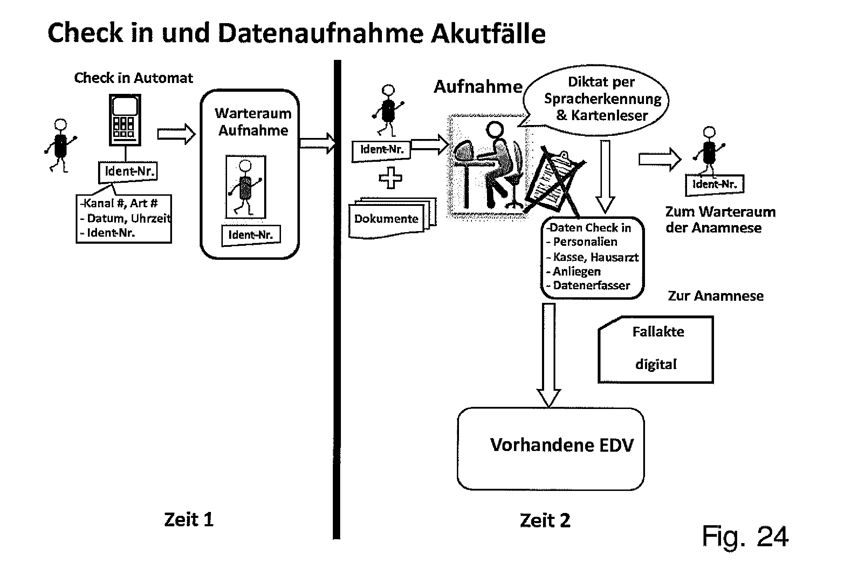

Wie in Fig. 24 gezeigt, umfasst die erste Phase der Aufnahme zwei Zeitabschnitte:
Zeit 1: Der Beginn dieser Zeit wird vom Hilfesuchenden im Warteraum der Ambulanz durch Betätigen eines Geräts erfasst. Dies kann z. B. wie im Parkhaus durch ziehen einer Karte mit Zeitangaben und Stationsangaben erfolgen. Der Nachfragende erhält einen Beleg mit einer identifizierenden Nummer. Diese ist aufgedruckt und dient am Abschluss der Zeit dem Aufruf durch die Station der Datenaufnahme. Damit sind Anfang und Ende der Zeit 1 in Echtzeit und ohne manuelle Zusatzarbeit erfasst.
Zeit 2: Die Station "Datenaufnahme" erhält die Ident-Nummer, die automatisch auf einem Bildschirm erscheint. Die Daten zur Person werden aus seinen Angaben oder mitgebrachten Unterlagen registriert. Sie werden gegebenenfalls aus seiner Karte der Krankenversicherung um die Daten des Kostenträgers ergänzt und sind so überprüfbar. Aus dem existierenden IT-System wird eine eventuell bereits vorhandene Fallakte aufgerufen und ergänzt. Eine neue Fallakte wird unter einer Fallnummer angelegt und sowohl in der Betriebs-Steuerung als auch im vorhandenen IT-System gespeichert. Die nachfragende Person erhält zusätzlich zur Ident-Karte die Angaben für die medizinische Aufnahme.

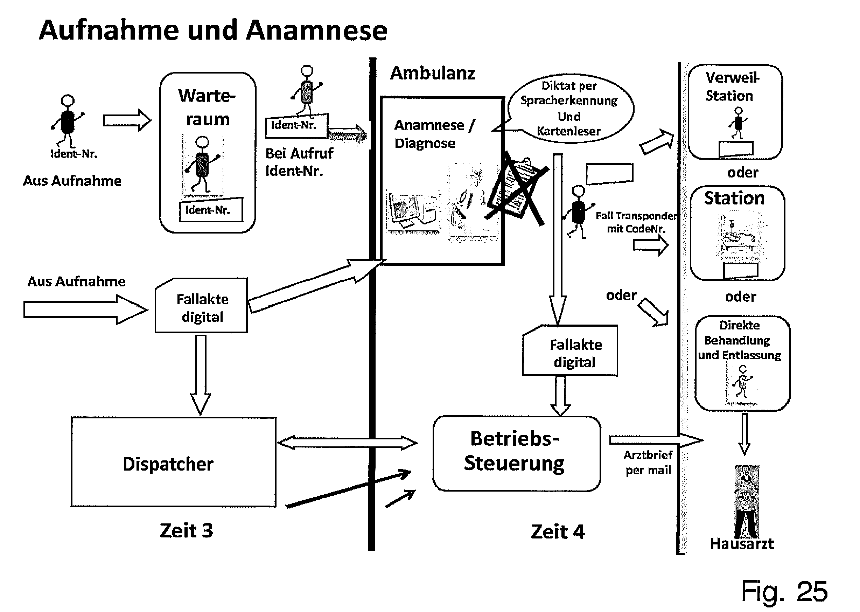

Gemäß Fig. 25 beginnt eine Zeit 3 mit dem Eintreffen des Nachfragenden im zugewiesenen Warteraum der medizinischen Aufnahme. Die Transferzeit zwischen Zeit 2 und Zeit 3 wird aus der Differenz von Ende der Zeit 2 und Anfang der Zeit 3 errechnet. Zur Betriebssteuerung erhält eine Stelle die Informationen über die Zahl der Fäll innerhalb der Zeiträume 1 bis 3. Daraus kann die Stelle die aktuelle Belastung errechnen. Über erfindungsgemäße Prognoseprogramme wird die für den Betrieb zu erwartende Belastung errechnet, und es können erforderliche Maßnahmen bei signifikanten Abweichungen eingeleitet werden.

Eine Zeit 4 beginnt mit dem Eintreffen des Nachfragenden im ärztlichen Sprechzimmer der Anamnese und (vorläufigen) Diagnose. Beides wird über Sprachspeicherung und/oder Spracherkennung in die Fallakte aufgenommen und der Betriebs-Steuerung zugeleitet. Die Spracherkennung kann durch eine Sprachspeicherung ergänzt sein. Beides betrifft insbesondere Diagnosen, Verordnungen, Rezeptstellungen, Aufträge verschiedener Art innerhalb des räumlichen Prozessbereiches oder "außer Haus".

Ist stationäre Behandlung erforderlich, wird der Patient nach Möglichkeit in ein Zuweisungs- oder in die endgültige Station eingewiesen. Bei ambulanten Fällen folgt die Entlassung. Das weitere Vorgehen ist im sogenannten "Transferauftrag" enthalten.

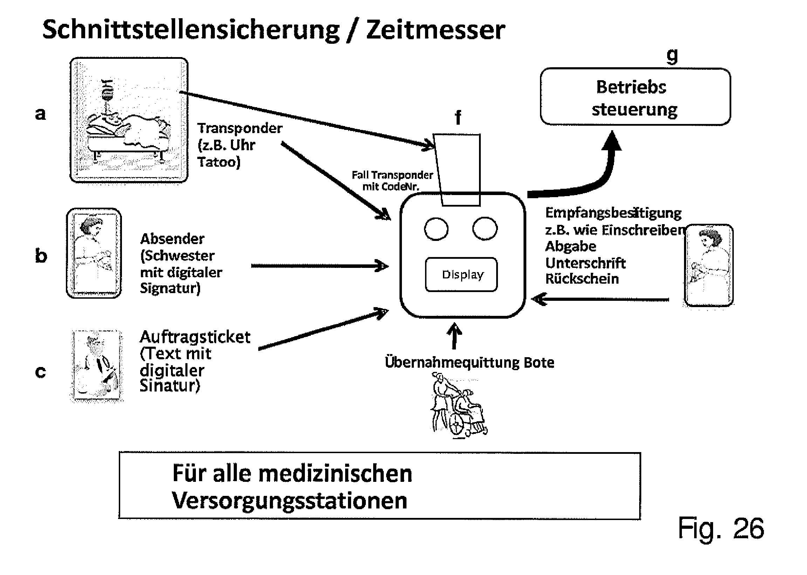

Die Zeit 4 gemäß Fig. 25 endet mit dem Ausstellen eines "Transferauftrages". Ein solcher Auftrag wird gemäß Fig. 26 wie folgt gesteuert:
Es erfolgen zunächst Identifizierungsvorgänge:
   a) es erfolgt die Identifizierung des Patienten mit seiner Fallnummer. Dies kann durch einen aktiven oder passiven Transponder erfolgen, der entweder am Körper oder am Bett des Patienten befestigt ist.
   b) Die Identifizierung der absendenden Stelle erfolgt ebenfalls durch Transponder mit Angaben zur Stelle und Station des Absenders.
   c) es wird ein Auftrag an die empfangende Stelle mit Angabe der gewünschten Maßnahmen und der digitalen Unterschrift des Auftraggebers und seiner Position ausgegeben.
   d) Die den Transport ausführende Person bestätigt den Empfang des Auftrages für den Transfer. Der zeitliche Beginn des Transfers kann erst erfolgen, wenn die empfangende Stelle einen dafür vorgesehenen "Slot" ähnlich dem Luftverkehr zugewiesen hat. Durch diese Rasterung in Zeitfenster wird eine gewisse Taktung für die Transporte erreicht.
   e) Die empfangende Stelle bestätigt den Erhalt. Dies erfolgt zweckmäßigerweise über eine automatische Datenerfassung, eine Transponderdetektion und dergleichen Mittel.
   f) Alle dabei ermittelten Daten werden in einem gemeinsamen Speicher abgelegt und in einem Schritt g) werden alle diese Daten auch in der Betriebssteuerung erfasst.

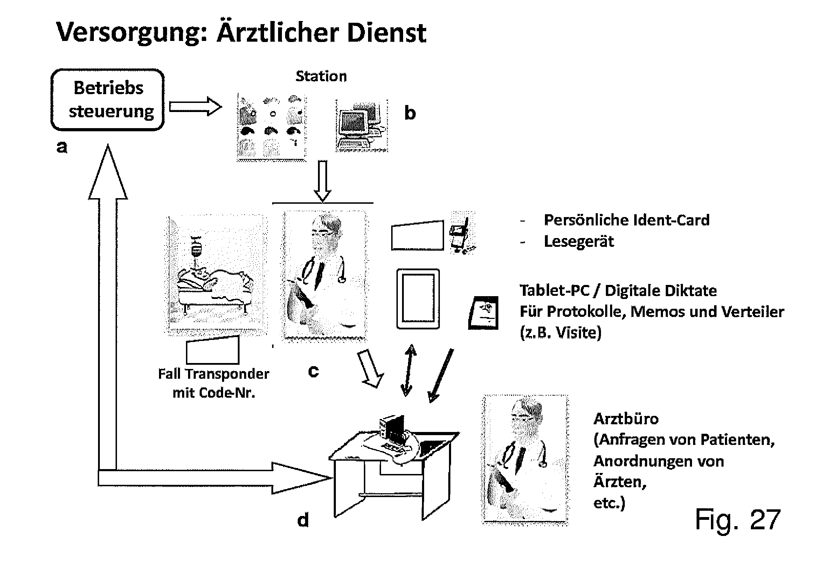

Fig. 27 zeigt das systematische Zusammenwirken der Komponenten zur ärztlichen Versorgung des Patienten:
a) In der Betriebsteuerung sind alle noch nicht abgeschlossenen Fälle sowie künftige, terminierte Fälle nach Stationen geordnet gespeichert. Fälle im Transfer werden bis zur Freigabe eines Slot bei der abgebenden, danach bei der aufnehmenden Station gespeichert.
b) Die Station kann sich den derzeitigen Status, zukünftige Belastungen nach Termin (Tag, Woche, Monat) sowie zusätzliche Informationen (beispielsweise Dienstpläne von Ärzten und Schwestern) in verschiedenen Formaten auf ihrem Display anzeigen lassen und dann erforderliche Maßnahmen veranlassen.
c) Der diensthabende Arzt kann sich für das Gespräch mit Patienten die ihn betreffenden Fälle aufrufen. Dies schließt auch die von einem Transponder oder auf anderem Weg erfassten Körperdaten des Patienten mit ein.
d) Jeder Arzt verfügt über ein "mobiles Arztbüro". Das ist ein Raum, in dem er über seine Mobilgeräte den Zugang zu allen für ihn relevanten Fallakten hat. Er kann dort in Ruhe seine Dispositionen für die ihm anvertrauten Patienten treffen und Aufträge für die Medikation, Diagnostik, Transfer etc. treffen.

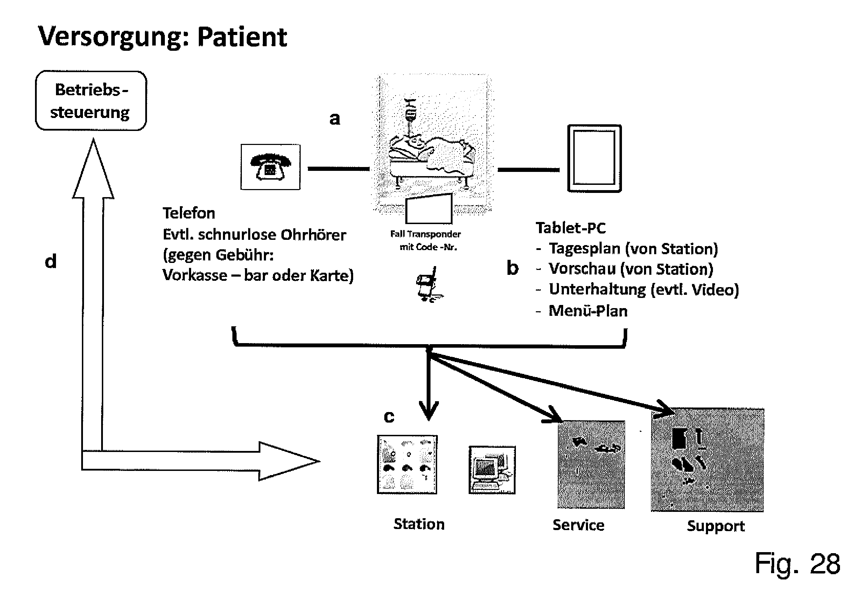

Fig. 28 zeigt beispielhaft Ausführungsbeispiele einer Patientenversorgung. Einen wesentlichen Einfluss auf den Prozess der Heilung hat auch die Versorgung des Patienten mit Informationen über seinen Prozessablauf, Speisen, Unterhaltung und anderen Annehmlichkeiten. Dazu gehört:
a) In vielen Krankenhäusern sind die Bettenplätze heute bereits mit Telefon und Fernsehen ausgestattet. In einfachen Steuerungssystemen gemäß der Erfindung genügt es, wenn diese vorhandenen Geräte über geeignete Einrichtungen so mit dem Steuerungssystem verbunden werden, das der Patient die für ihn relevanten Informationen erhält.
b) Gemäß der Erfindung kann der Patient über einen Tablet-PC oder ähnliche Einrichtung und einem am Körper des Patienten angebrachten Transponder mit dem Steuerungssystem verbunden werden. Die vielfältigen Funktionen dieser Geräte können hier nicht dargestellt werden. Die Verbindung wird aus Datenschutzgründen unterbrochen, wenn der Patient mit seinem Transponder sich nicht in der Nähe seines Tablet PC befindet und ist verschlüsselt (beispielsweise ähnlich Blue Tooth).
c) Dies ermöglicht die Verbindung zur Station und Servicediensten. Dabei gehen in einem Schritt d) die medizinischen Daten an die Betriebsteuerung weiter.

Das erfindungsgemäße Verfahren wurde anhand von Ausführungsbeispielen dargestellt. Im Rahmen fachmännischen Handelns sind weitere Ausführungsformen möglich. Diese ergeben sich insbesondere aus den Unteransprüchen.

### Bezugszeichenliste

- 1: Prozess
- 2: erster Nachbarprozess
- 3: zweiter Nachbarprozess
- 4: Prozessschritt
- 5: Knotenpunkt
- 6: Verzweigungspunkt
- 7: stochastische Störungen
- 8: datenverarbeitende Einrichtung
- 9: Datenbanksystem
- 10: Endgerät für Erfassungssystem
- 11: Standard-Ablaufplan
- 12: Prozessdaten
- 13: Belastungs- und Störungsdatensatz
- 14: Ausgleichsalgorithmus
- 15: Entlastungs- und Entstörungsdatensatz
- 16: Entlastungs- und Entstörungsanweisungen
- 18: Dispatcher-Endgerät
- 19: typbezogener Unterablaufplan
- 20: fallbezogener Unterablaufplan
- 21: archivierter Unterablaufplan
- 22: Input-Feld
- 23: Output-Feld
- 24: Arbeits- und Ausführungsabschnitte
- 25: zugeordneter Datensatz
- 26: Anschluss-Datenfeld
- 27: Plattform-Abschnitt
- 28: Identifizierungsfeld
- 29: Klassifizierungsfeld
- 30: Verwendungsfeld
- 31: Änderungs- und Verfolgungsfeld
- 32: Personalfeld
- 33: Prozessabschnitt
- 34: Daten und Datensätze für Prozessschritte
- 35: erstes Fließband
- 36: Teile
- 37: zweites Fließband
- 38: Bilderfassungseinheit
- 39: Uhr
- 40: Zähleinrichtung

## Patentansprüche

1. Verfahren zum Ausführen einer Ablaufsteuerung eines gemischten Prozesses (1), wobei der Prozess und der mindestens eine Nachbarprozess aus jeweils mehreren deterministisch aufeinander folgenden Prozessschritten (4) besteht, die stochastischen Störungen (7) ausgesetzt sind,
wobei
eine datenverarbeitende Einrichtung (8) mit einem auf der Einrichtung implementierten Datenbanksystem (9) sowie ein oder mehrere Endgeräte (10) an einzelnen räumlichen und/oder zeitlichen Prozessschritten und/oder Prozessstationen vorgesehen sind und folgende Schritte ausgeführt werden:
- Erzeugen je eines Standard-Ablaufplanes (11) für den Prozess und/oder für den Nachbarprozess in Form einer auf dem Datenbanksystem gespeicherten Datensatzstruktur,
- Erfassen einer aktuell vorliegenden Belastungs- und Störungssituation durch die an den Prozessstationen angeordnete Endgeräte (10) für eine vorab definierte Menge aus Prozessparametern (12),
- Übermitteln der Prozessparameter der Belastungs- und Störungssituation von den Endgeräten über ein Kommunikationsnetz an die Datenbank und Erzeugen eines Belastungs- und Störungsdatensatzes (13) für den Prozess, jeden einzelnen Prozessschritt und/oder jede einzelne Prozessstation,
- Ausführen eines auf den jeweiligen Belastungs- und Störungsdatensatz (13) abgestimmten Ausgleichsalgorithmus (14) und Erzeugen eines Entlastungs- und Entstörungsdatensatzes (15) aus Entlastungs- und Entstörungsanweisungen (16),
- Übermitteln der Entlastungs- und Entstörungsanweisungen als Informationen an die an den Prozessstationen angeordneten Endgeräte (10).

2. Verfahren nach Anspruch 1,
**dadurch gekennzeichnet, dass**
der Standard-Auflaufplan (11) mindestens einen kategorialen Unter-Ablaufplan enthält, wobei als der mindestens eine Unter-Ablaufplan ein typbezogener (19), ein fallbezogener (20) und/oder ein archivierter Unter-Ablaufplan (21) vorgesehen ist.

3. Verfahren nach einem der Ansprüche 1 oder 2,
**dadurch gekennzeichnet, dass**
der jeweilige Standard-Ablaufplan (11) mit personen- und/oder dienststellenbezogenen Kategorien, insbesondere mitarbeiter- und/oder kundenspezifischen Kategorien, erzeugt wird.

4. Verfahren nach einem der vorhergehenden Ansprüche,
**dadurch gekennzeichnet, dass**
der Standard-Ablaufplan (11) in Arbeits- und/oder Ausführungsschritte (24) untergliedert ist, wobei jeder der Schritte einen Datensatz (25) mit einem Anschluss-Datenfeld (26) für Einlaufs- und Auslaufszeitpunkte, Ankunfts- und Abgabezeitpunkte und/oder Warteintervalle aufweist.

5. Verfahren nach einem der vorhergehenden Ansprüche,
**dadurch gekennzeichnet, dass**
die einzelnen Prozessschritten (4) und/oder Prozessstationen zugeordneten Datensätze des Standard-Ablaufplans (11) ausschließlich in eindeutig festgelegten und voneinander abgetrennten Datenbankbereichen gespeichert werden, wobei diese vorbestimmten Datenbankbereiche den einzelnen Prozessschritten und/oder Prozessstationen entsprechen und eine Übernahme der Datensätze bezüglich anderer Prozessschritte im Standard-Ablaufplan über das Anschluss-Datenfeld (26) erfolgt.

6. Verfahren nach einem der vorhergehenden Ansprüche,
**dadurch gekennzeichnet, dass**
die Datensätze des Standard-Ablaufplanes (11) folgenden Aufbau aufweisen:
- einen Plattform-Abschnitt (27) mit einem Identifizierungsfeld (28), einem Klassifizierungsfeld (29), einem Verwendungsfeld (30), einem Änderungs- und Verfolgungsfeld (31),
- einen Prozess-Abschnitt (33) mit einzelnen, den jeweiligen Prozessschritten (4) und/oder Prozessstationen zugeordneten Datensätzen (34).

7. Verfahren nach einem der vorhergehenden Ansprüche,
**dadurch gekennzeichnet, dass**
die Belastungs- und Störungssituation an den einzelnen Prozessschritten (4) und/oder Prozessstationen durch die jeweiligen Endgeräte zeitlich skaliert erfasst und wiedergegeben wird, wobei die zeitliche Skalierung und die zeitlichen Abschnitte frei wählbare Parameter sind.

8. Verfahren nach einem der vorhergehenden Ansprüche,
**dadurch gekennzeichnet, dass**
bei einem Versagen des Ausgleichsalgorithmus (14) eine Ausgabe über dessen Versagen an ein Dispatcher-Endgerät (17) erfolgt.

9. Verfahren nach einem der vorhergehenden Ansprüche,
**dadurch gekennzeichnet, dass**
das Erfassen der aktuell vorliegenden Belastungs- und Störungssituation durch an einzelnen Prozessstationen und/oder Prozessschritte angeordnete Erfassungsmittel für vorab definierte Prozessparameter durch ein in Echtzeit ablaufendes Erfassungssystem (TRIM) erfolgt, wobei das Erfassen weiterhin ein Verfolgen räumlicher und/oder zeitlicher Ortskoordinaten für steuerungsrelevante Daten, insbesondere Daten von Personen, Geräten und/oder Ressourcen, umfasst.

10. Verfahren nach Anspruch 9,
**dadurch gekennzeichnet, dass**
das Erfassen mittels drahtlos arbeitender und Personen oder räumlichen Abschnitten zugeordneten Ortungseinrichtungen erfolgt, wobei Aufenthaltsorte und/oder Standorte lokalisierbar sind und/oder eine Erfassung mittels an einzelnen Prozessstationen angeordneten Zähleinrichtungen (40) erfolgt, wobei durch die jeweilige Zählreinrichtung Durchsatzzahlen, Zulaufzahlen und/oder Ablaufzahlen lokal erfasst werden.

11. Verfahren nach einem der vorhergehenden Ansprüche,
**dadurch gekennzeichnet, dass**
die von dem Erfassungssystem (10) erfassten Daten zusammen mit den Anweisungen des Ausgleichsalgorithmus an die einzelnen Prozessstationen und/oder an einen zentralen Steuerserver rückgemeldet werden, wobei ein direkter in Echtzeit erfolgender Abgleich zwischen den Anweisungen und deren erzielter Wirkung erreicht wird.

12. Verfahren nach einem der vorhergehenden Ansprüche,
**dadurch gekennzeichnet, dass**
das Erfassungssystem (10) mobile Endgeräte als Erfassungsmittel in Verbindung mit einem auf das Erfassungssystem angepassten internen Kommunikationsnetzwerk aufweist, wobei der Zugang zu den Erfassungsmitteln sicherheitswirksam geschützt ist, die Benutzung der Erfassungsmittel personalisiert erfolgt und die Erfassungsmittel bei Nichtbenutzung in einen nicht personalisierten Zustand zurückgesetzt werden.

13. Verfahren nach einem der vorhergehenden Ansprüche,
**dadurch gekennzeichnet, dass**
bei dem Ausführen des auf den jeweiligen Belastungs- und Störungsdatensatz (13) abgestimmten Ausgleichsalgorithmus (14) und bei dem Erzeugen eines Entlastungs- und Entstörungsdatensatzes Abweichungen zwischen einem Soll- und einem Ist-Wert von steuerungsrelevanten Prozess über die Gesamtheit der Prozessschritte überwacht werden, wobei diese Abweichungen auf Zufälligkeit und Signifikanz geprüft werden.

14. Verfahren nach Anspruch 13,
**dadurch gekennzeichnet, dass**
die Prüfung auf Zufälligkeit und Signifikanz der Abweichungen zwischen Soll- und Ist-Wert ein Setzen von Toleranzbereichen umfasst, wobei ein Überschreiten der Toleranzbereiche auf dem jeweiligen Kommunikationsgerät angezeigt wird, das der Prozessstation (4) und/oder dem Prozessschritt zugeordnet ist.

15. Verfahren nach Anspruch 14,
**dadurch gekennzeichnet, dass**
mittels des Kommunikationsgerätes eine Rückmeldung über die Tolerierbarkeit der Überschreitungen der Toleranzbereiche ausführbar ist, wobei diese Rückmeldung mit einer eindeutig zuordenbaren Signatur verknüpft wird.

16. Verfahren nach einem der vorhergehenden Ansprüche,
**dadurch gekennzeichnet, dass**
die als signifikant detektierten Abweichungen einer sich wiederholenden stufenförmigen Auswertung unterzogen werden, wobei fortlaufend ein Grad einer Korrekturdringlichkeit der jeweiligen signifikanten Abweichung ermittelt wird, bei dem
- die jeweilige signifikante Abweichung aus einem Speicher geladen werden,
- für jede signifikante Abweichung ein Kerninhalt ermittelt wird,
- eine statistische Ermittlung über eine erfasste Datenmenge mit einem aus der Datenmenge erzeugten Themencluster erfolgt,
- auf der Grundlage des Kerninhaltes und des Themenclusters ein Parameter für den Grad der Korrekturdringlichkeit ermittelt wird,
- auf der Grundlage des Grades der Korrekturdringlichkeit ein Prioritätsgrad zum Ausführen des Ausgleichsalgorithmus ermittelt wird.

17. Verfahren nach einem der vorhergehenden Ansprüche,
**dadurch gekennzeichnet, dass**
an den bei dem Verfahren beteiligten Endgeräten eine zeitweilige Personalisierung ausgeführt wird, wobei die Endgeräte grundsätzlich eine neutrale, nicht personalisierte Endgerätemenge bilden, bei der nachfolgend jedes einzelne Endgerät bei seiner Entnahme durch einen Nutzer personalisiert wird, wobei die Personalisierung nach Ende der Verwendung gelöscht wird und das jeweilige Endgerät in einen nicht personalisierten Zustand zurückgesetzt wird.

18. Verfahren nach einem der vorhergehenden Ansprüche,
**dadurch gekennzeichnet, dass**
die bei dem Verfahren beteiligten Endgeräte einen nicht benutzbaren Zustand einnehmen, sofern eine Datenverbindung zwischen einem an einem Benutzer befestigten Transponder und dem jeweiligen personalisierten Endgerät über eine vorbestimmte Zeit hinaus unterbrochen und/oder inaktiv ist.

19. Verfahren nach einem der vorhergehenden Ansprüche,
**dadurch gekennzeichnet, dass**
die bei der Neutralisierung der Endgeräte (10) und/oder die bei dem Zurücksetzen der Endgeräte in den unbenutzbaren Zustand zu löschenden Daten in einen Auslagerungsserver übertragen und anschließend auf dem Endgerät gelöscht werden.

20. Verfahren nach einem der vorhergehenden Ansprüche,
**dadurch gekennzeichnet, dass**
die Endgeräte (10) für eine Sprachaufzeichnung und/oder eine Spracherkennung eingerichtet sind, wobei die Sprachaufzeichnung und das Resultat der Spracherkennung in einem Server gespeichert werden.

21. Verfahren nach Anspruch 20,
**dadurch gekennzeichnet, dass**
die gesprochene Eingabe mit einem den Sprecher identifizierenden Signalcode verknüpft wird.

22. Verfahren nach Anspruch 21,
**dadurch gekennzeichnet, dass**
bei einem über die Endgeräte (10) erfolgenden Dialog ein Umschalten auf den identifizierenden Signalcode ausführbar ist, wobei ein direktes Ansprechen der Gesprächsteilnehmer ausführbar ist.

23. Verfahren nach einem der vorhergehenden Ansprüche,
**dadurch gekennzeichnet, dass**
personengebundene Daten einzelner Prozessschritte in einem separaten sicherheitswirksam abgeteilten und insbesondere nur für Berechtigte zugänglichen Speicherbereich gehalten werden.
